# FASCICULE DE BREVET EUROPEEN

(11) **EP 3 084 773 B1**
(45) Date de publication et mention de la délivrance du brevet: **10.01.2018**
(21) Numéro de dépôt: 14815711.8
(22) Date de dépôt: 18.12.2014
(51) Int. Cl.: G21C 19/44, G21C 19/46, G21F 9/06, G21F 9/30, C22B 60/04, C22B 7/00

(54) **PROCÉDÉ DE TRAITEMENT D'UN COMBUSTIBLE NUCLÉAIRE USÉ COMPRENANT UNE ÉTAPE DE DÉCONTAMINATION DE L'URANIUM(VI) EN AU MOINS UN ACTINIDE(IV) PAR COMPLEXATION DE CET ACTINIDE(IV)**
VERFAHREN ZUR VERARBEITUNG VON VERBRAUCHTEM KERNBRENNSTOFF UMFASSEND EINEN SCHRITT DER DEKONTAMINATION VON URAN (VI) IN MINDESTENS EIN AKTINID (IV) DURCH KOMPLEXIERUNG DIESES AKTINIDS (IV)
METHOD FOR PROCESSING SPENT NUCLEAR FUEL COMPRISING A STEP OF DECONTAMINATING THE URANIUM (VI) INTO AT LEAST ONE ACTINIDE (IV) BY COMPLEXING THIS ACTINIDE (IV)

(30) Priorité: 20.12.2013 FR 1363251
(43) Date de publication de la demande: 26.10.2016
(73) Titulaire: Commissariat à l'Énergie Atomique et aux Énergies Alternatives, 75015 Paris (FR); AREVA NC, 92400 Courbevoie (FR)
(72) Inventeur: BERNIER, Gilles, F-84000 Avignon (FR); SOREL, Christian, F-30400 Villeneuve les Avignon (FR); MIGUIRDITCHIAN, Manuel, F-84000 Avignon (FR); BALAGUER, Coralie, F-83560 Vinon sur Verdon (FR); AMEIL, Estelle, F-30130 Carsan (FR)
(74) Mandataire: Brevalex
(86) Numéro de dépôt international: PCT/EP2014/078453
(87) Numéro de publication internationale: WO 2015/091791

(56) Documents cités:
- WO-A1-2011/147871
- FR-A1- 2 907 346
- FR-A1- 2 948 385

## Description

### DOMAINE TECHNIQUE

La présente invention se rapporte au domaine du traitement de combustibles nucléaires usés.

Plus spécifiquement, elle se rapporte à un procédé de traitement d'un combustible nucléaire usé qui comprend une étape de décontamination de l'uranium(VI) en un ou plusieurs actinides(IV) et, plus spécialement en neptunium et/ou plutonium, par complexation de cet (ces) actinide(s)(IV).

### ÉTAT DE LA TECHNIQUE ANTÉRIEURE

Les usines de traitement de combustibles nucléaires usés utilisent à ce jour le procédé PUREX (pour **P**lutonium **U**ranium **R**efining by **EX**traction) pour récupérer l'uranium et le plutonium présents dans ces combustibles.

Ceci est obtenu par la mise en oeuvre de plusieurs cycles de purification par extraction liquide-liquide. L'extractant utilisé est le phosphate de tri-n-butyle qui présente une affinité particulière pour l'uranium et le plutonium.

Le procédé PUREX, tel qu'il est mis en oeuvre dans les usines (UP2-800, UP3) de La Hague en France, comprend schématiquement trois cycles de purification, à savoir :
- un premier cycle, qui vise à décontaminer conjointement l'uranium et le plutonium vis-à-vis de l'américium, du curium et des produits de fission, et à réaliser une partition de l'uranium et du plutonium en deux flux aqueux ; et
- deux cycles complémentaires, dits respectivement « *deuxième cycle uranium* » et « *deuxième cycle plutonium* » et qui visent à purifier séparément l'uranium et le plutonium après leur partition.

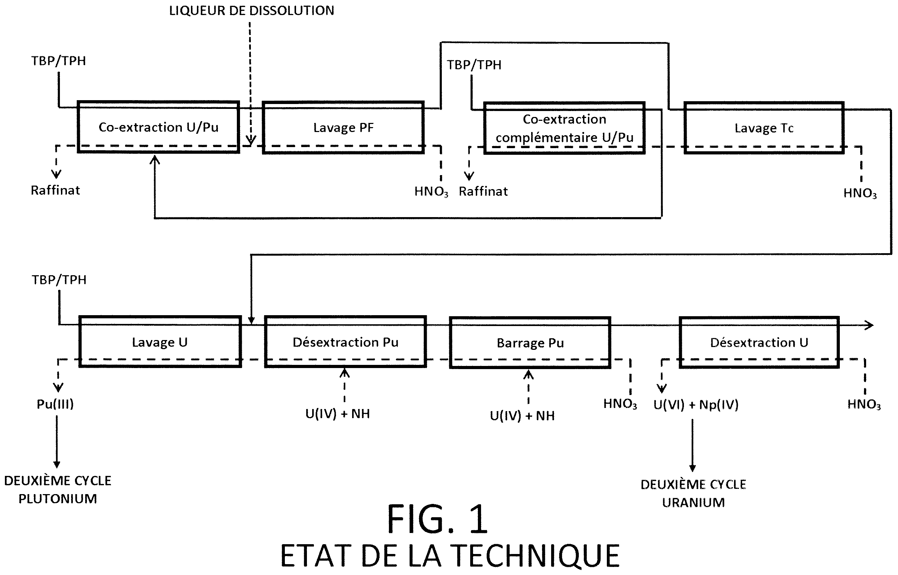

Comme le montre la figure 1 qui représente un schéma simplifié du premier cycle du procédé PUREX, ce cycle commence par une opération, dénommée « co-*extraction U*/*Pu* » sur cette figure, qui consiste à extraire conjointement l'uranium et le plutonium, le premier à l'état d'oxydation VI, le second à l'état d'oxydation IV, d'une phase aqueuse dans laquelle ils se trouvent.

Cette phase aqueuse est obtenue par dissolution d'un combustible usé dans de l'acide nitrique et clarification du mélange ainsi obtenu. Elle est communément appelée liqueur de dissolution. Elle contient typiquement de 200 à 250 g/L d'uranium pour 2 à 3 g/L de plutonium. Elle contient également du neptunium, de l'américium, du curium et des produits de fission.

La co-extraction de l'uranium et du plutonium est réalisée au moyen d'une phase organique non miscible à l'eau, qui comprend un extractant présentant une forte affinité pour l'uranium(VI) et le plutonium(IV), en l'espèce le phosphate de tri-n-butyle (ou TBP) que l'on utilise en solution à 30% (v/v) dans un diluant organique, en l'occurrence un dodécane (tétrapropylène hydrogéné ou TPH). L'uranium et le plutonium passent ainsi dans la phase organique tandis que l'américium, le curium et la majeure partie des produits de fission restent dans la phase aqueuse.

Cette co-extraction est suivie de deux opérations de lavage de la phase organique, dénommées « *lavage PF* » et « *lavage Tc* », qui sont réalisées au moyen de phases aqueuses nitriques d'acidités différentes en vue de retirer de la phase organique la fraction de produits de fission et, notamment de technétium, ayant été extraite conjointement avec l'uranium et le plutonium. Le « *lavage Tc* » est couplé à une opération complémentaire de co-extraction de l'uranium et du plutonium, notée « co-*extraction complémentaire U*/*Pu* », que l'on réalise au moyen d'une phase organique, de même composition que celle utilisée pour la « *co-extraction U*/*Pu* », afin de récupérer la fraction d'uranium et de plutonium susceptible d'avoir suivi le technétium en phase aqueuse au cours du « *lavage Tc* ».

La ou les phases aqueuses issues de ces opérations de co-extraction et de lavage, auxquelles on donne le nom de raffinats et qui sont chargées en américium, curium et produits de fission, sont éliminées du cycle, tandis que la phase organique, qui est, elle, chargée en uranium(VI) et en plutonium(IV), est dirigée vers une zone au niveau de laquelle est réalisée la partition de ces deux éléments.

Cette partition comprend :
- une opération, dénommée « *désextraction Pu* », qui vise à désextraire le plutonium de la phase organique issue des opérations de co-extraction et de lavage au moyen d'une phase aqueuse nitrique de faible acidité, comprenant du nitrate uraneux permettant de réduire le plutonium(IV), qui est très extractible par le TBP, en plutonium(III) qui, lui, ne l'est que très peu et ce, sans réduire l'uranium, ainsi que du nitrate d'hydrazinium, noté NH sur la figure 1, qui joue le rôle d'agent anti-nitreux ;
- une opération, dénommée « *barrage Pu* », qui vise à parfaire la désextraction du plutonium de la phase organique au moyen d'une phase aqueuse nitrique, également de faible acidité et comprenant du nitrate uraneux et de l'hydrazine ; et
- une opération, dénommée « *désextraction U* », qui vise à désextraire l'uranium(VI) de ladite phase organique au moyen d'une phase aqueuse nitrique très diluée.

La désextraction du plutonium de la phase organique s'accompagnant d'une désextraction partielle de l'uranium, la partition comprend, de plus, une opération, dénommée « *lavage U* », qui vise à retirer l'uranium ainsi désextrait de la phase aqueuse nitrique issue de la « *désextraction Pu* » au moyen d'une phase organique, de même composition que celles utilisées pour la « *co-extraction U*/*Pu* » et la « *co-extraction complémentaire U*/*Pu* ».

On obtient ainsi au terme du premier cycle :
∗ un premier flux aqueux qui comprend plus de 99,9% du plutonium initialement présent dans la liqueur de dissolution et qui ne comprend plus d'uranium ; et
∗ un deuxième flux aqueux qui comprend plus de 99,9% de l'uranium initialement présent dans la liqueur de dissolution et qui ne comprend plus de plutonium.

Le premier flux aqueux issu du premier cycle est alors soumis au *« deuxième cycle plutonium* » dont le but est de parfaire la décontamination du plutonium vis-à-vis des produits de fission susceptibles d'être encore présents à l'état de traces dans ce flux. Après quoi, ce flux, qui comprend du plutonium, est dirigé vers une zone où le plutonium est converti en oxyde (PuO₂), puis entreposé sous cette forme, en vue d'une utilisation ultérieure dans la fabrication de pastilles de combustible nucléaire MOX.

Parallèlement, le deuxième flux aqueux issu du premier cycle est soumis au « *deuxième cycle uranium* » qui a essentiellement pour objectif de séparer l'uranium du neptunium.

En effet, dans le premier cycle de purification, la majeure partie du neptunium présent dans la liqueur de dissolution est extrait, principalement sous forme de neptunium(VI), en même temps que l'uranium et le plutonium. Lors de la désextraction réductrice du plutonium, le neptunium(VI) est réduit par le nitrate uraneux en neptunium(IV), état dans lequel il est extractible par le TBP.

Le neptunium suit donc quasi quantitativement l'uranium au cours de toutes les opérations du premier cycle de purification, d'où la nécessité de soumettre le deuxième flux aqueux, chargé en uranium, qui est issu de la partition, à un cycle complémentaire de purification, permettant de décontaminer cet uranium, principalement en neptunium, avant qu'il ne soit converti en oxyde d'uranium.

Récemment, une évolution importante du procédé PUREX, dénommée procédé COEX™ (pour **COE**Xtraction), a été proposée dans la demande internationale PCT publiée sous le numéro WO 2007/135178 (ci-après référence **[1]**).

En effet, tout en assurant une récupération et une purification de l'uranium et du plutonium comparables à celles obtenues dans le procédé PUREX, cette évolution permet de réduire considérablement les risques d'un détournement du plutonium à des fins militaires. Elle permet aussi de produire un flux aqueux qui comprend un mélange de plutonium, d'uranium et, éventuellement, de neptunium purifiés, c'est-à-dire totalement décontaminés en produits de fission, et d'utiliser ce flux pour alimenter un atelier dit de « *co-conversion* » dont la fonction est de préparer un oxyde mixte (U,Pu)O₂ ou (U,Pu,Np)O₂ directement utilisable pour la fabrication de combustibles nucléaires de type MOX (pour **M**ixed **OX**ide Fuel).

Pour ce faire, le procédé COEX™ prévoit, après des opérations de co-extraction de l'uranium et du plutonium et de lavage de la phase organique issue de cette co-extraction, que l'on réalise de façon analogue à celles mises en oeuvre dans le premier cycle de purification du procédé PUREX, de réaliser la partition de l'uranium et du plutonium de sorte à obtenir un premier flux aqueux comprenant du plutonium, de l'uranium et, éventuellement, du neptunium, et un deuxième flux aqueux comprenant de l'uranium et, éventuellement, du neptunium mais ne comprenant pas de plutonium.

Il prévoit également de maintenir, dans toutes les opérations situées en aval de cette partition, le plutonium en présence d'uranium et, éventuellement de neptunium, jusqu'à l'obtention de l'oxyde mixte (U,Pu)O₂ ou (U,Pu,Np)O₂.

Dans les versions du procédé COEX™ dans lesquelles la gestion du neptunium est conçue de telle sorte que tout ou partie de cet élément suive l'uranium dans le deuxième flux aqueux issu de la partition - et qui sont celles illustrées sur les figures 1, 2 et 4 de la référence **[1]** -, on retrouve la même nécessité que dans le procédé PUREX, à savoir celle de soumettre ce deuxième flux aqueux à un « *deuxième cycle uranium* » pour débarrasser l'uranium du neptunium avant sa conversion en oxyde d'uranium.

Dans la perspective de réalisation de nouvelles usines de traitement de combustibles nucléaires usés, il serait souhaitable de parvenir à simplifier les procédés PUREX et COEX™ (pour ce dernier, dans ses versions nécessitant un « *deuxième cycle uranium* ») de manière à optimiser à la fois les coûts d'investissement, d'exploitation et de maintenance de telles usines, sans affecter toutefois les performances de ces procédés en matière de rendement et de qualité de traitement des combustibles nucléaires usés.

En effet, l'économie ne serait-ce que d'un seul cycle de purification comme le « *deuxième cycle uranium* » permettrait de diminuer, non seulement le nombre des appareillages et des équipements nécessaires à la mise en oeuvre du procédé de traitement, mais également le volume des réactifs consommés, le volume des effluents à traiter, la durée du procédé et, par voie de conséquence, de réduire la taille des usines, leurs coûts de construction et leurs coûts de fonctionnement.

Un procédé permettant de supprimer le « *deuxième cycle uranium* » du procédé PUREX a déjà été proposé dans la demande internationale PCT publiée sous le numéro WO 2005/052950 (ci-après référence **[2]**).

Ce procédé est basé sur l'introduction dans le premier cycle de purification d'une opération visant à décontaminer l'uranium en neptunium. Cette opération consiste à mettre la phase organique qui est issue soit de l'opération *« désextraction Pu* » soit de l'opération « *barrage Pu* » en contact avec une phase aqueuse nitrique comprenant un hétéropolyanion lacunaire qui complexe plus fortement les actinides(IV) et, notamment, le neptunium(IV) en phase aqueuse acide qu'il ne complexe l'uranium(VI). Ainsi, le neptunium(IV) tend à passer dans la phase aqueuse tandis que l'uranium(VI) reste, lui, dans la phase organique. L'hétéropolyanion lacunaire est typiquement un hétérotungstate tel qu'un arsénotungstate, un silicotungstate ou un germano-tungstate.

Or, ce procédé présente l'inconvénient majeur de faire appel à des agents complexants des actinides(IV) qui, outre de se présenter sous la forme de sels, renferment des atomes de tungstène et d'un métalloïde (arsenic, silicium ou germanium), ce qui, à une échelle industrielle, complique notablement la gestion des effluents générés par l'opération de décontamination de l'uranium en neptunium.

Le document FR 2 907 346 A1 (ci-après référence **[4]**) décrit un procédé comprenant une opération de désextraction des actinides(IV) d'une phase organique en utilisant un diglycolamide en tant qu'extractant. Les Inventeurs se sont donc fixé pour but de fournir un procédé qui, tout en permettant de supprimer le « *deuxième cycle uranium* » des procédés PUREX et COEX™, soit exempt de l'inconvénient que présente le procédé décrit dans la référence **[2],** de sorte à ne pas rajouter aux contraintes inhérentes aux procédés PUREX et COEX™ des contraintes additionnelles, notamment en terme de gestion des effluents produits.

Or, dans le cadre de leurs travaux, les Inventeurs ont constaté que l'utilisation de diglycolamides comme agents complexants des actinides(IV) permet de remplacer très avantageusement l'utilisation d'hétéropolyanions lacunaires telle que proposée dans la référence **[2],** non seulement parce que les diglycolamides représentent une famille de composés non salins, qui répondent au principe CHON (c'est-à-dire qu'ils ne sont constitués que d'atomes de carbone, d'hydrogène, d'oxygène et d'azote) et qui génèrent des produits gazeux après dégradation, mais aussi parce qu'ils conduisent à des facteurs de décontamination en neptunium qui sont, pour des temps de contact phase organique/phase aqueuse comparables, très nettement supérieurs à ceux obtenus avec des hétéropolyanions lacunaires.

En particulier, les Inventeurs ont constaté qu'il est possible d'obtenir, pour des temps de contact phase organique/phase aqueuse de quelques minutes en mélangeurs-décanteurs, des facteurs de décontamination de l'uranium en neptunium qui répondent à la spécification la plus sévère ayant été définie à ce jour par les normes UNIREP (pour **UNI**ted **REP**rocessors) en matière de décontamination de l'uranium en neptunium et qui est celle qui concerne les combustibles UOX3 (combustibles initialement enrichis à 4,7% en ²³⁵U et soumis à un taux de combustion de 60 GWjt⁻¹).

Et c'est sur ces constatations qu'est basée la présente invention.

### EXPOSÉ DE L'INVENTION

L'invention propose un procédé de traitement d'un combustible nucléaire usé, qui comprend une décontamination de l'uranium(VI) en un ou plusieurs actinides(IV), laquelle décontamination comprend une opération de désextraction de l'actinide(IV) ou des actinides(IV) d'une phase organique, non miscible à l'eau et dans laquelle l'uranium(VI) et l'actinide(IV) ou les actinides(IV) sont présents, par mise en contact de la phase organique avec une phase aqueuse comprenant de l'acide nitrique et au moins un agent complexant qui complexe plus fortement les actinides(IV) que l'uranium(VI), puis séparation de la phase organique de la phase aqueuse, et qui est caractérisé en ce que ledit au moins un agent complexant est un diglycolamide.

Ainsi, le procédé de l'invention utilise l'aptitude que présentent les diglycolamides à complexer en phase aqueuse beaucoup plus fortement les actinides(IV) que les actinides(VI) et à permettre, lorsque des actinides(IV) sont présents dans une phase organique, conjointement avec de l'uranium(VI), et que cette phase organique est mise en contact avec une phase aqueuse dans laquelle se trouve un diglycolamide, le transfert sélectif des actinides(IV) de la phase organique à la phase aqueuse.

Il va de soi que, comme usuel dans le domaine du traitement des combustibles nucléaires usés, la phase organique dans laquelle l'uranium(VI) et l'actinide(IV) ou les actinides(IV) sont présents et dont ce dernier ou ces derniers sont désextraits comprend au moins un extractant de l'uranium(VI), lequel est de préférence du TBP, auquel cas ce dernier est typiquement en solution dans un diluant organique du type dodécane, de préférence dans un rapport volumique égal ou sensiblement égal à 30/70.

Il est à noter que l'aptitude des diglycolamides à complexer les actinides(IV) préférentiellement aux actinides(VI) est connue en elle-même (Sasaki et al., Analytical Sciences 2007, 23(6), 727, ci-après référence **[3]).**

Ce qui, par contre, est totalement nouveau est que cette aptitude soit mise à profit pour décontaminer l'uranium(VI) en actinides(IV) dans le cadre d'un procédé de traitement d'un combustible nucléaire usé et, en particulier, dans le cadre du premier cycle de purification des procédés PUREX et COEX™ et, ce qui est totalement inattendu, est le fait qu'elle conduise à des niveaux de décontamination de l'uranium en actinides(IV) tels qu'il est possible de supprimer le deuxième cycle de purification de l'uranium que comprennent ces procédés, sous réserve que la décontamination de l'uranium vis-à-vis des produits de fission (ruthénium et technétium principalement) soit, par ailleurs, suffisante.

On rappelle que les diglycolamides sont des composés de formule (I) ou de formule (II) ci-après :

R¹(R²)N-C(O)-CH₂-O-CH₂-C(O)-N(R³)R⁴ (I)

R¹(R²)N-C(O)-CH₂-O-CH₂-COOH (II)

dans laquelle R¹, R², R³ et R⁴ sont typiquement des groupes alkyles.

Conformément à l'invention, le diglycolamide est, de préférence, choisi parmi les diglycolamides de formule (I) dans laquelle le nombre total d'atomes de carbone que présentent ensemble R¹, R², R³ et R⁴ est au plus égal à 12 et les diglycolamides de formule (II) dans laquelle le nombre d'atomes de carbone que présentent ensemble R¹ et R² est au plus égal à 12, de sorte à présenter un caractère hydrophile suffisant pour pouvoir être utilisé en phase aqueuse.

De tels diglycolamides sont notamment le *N,N,N',N'*-tétraméthyl-diglycolamide (ou TMDGA, qui répond à la formule (I) dans laquelle R¹ = R² = R³ = R⁴ = CH₃), le *N,N,N',N'*-tétraéthyldiglycolamide (ou TEDGA, qui répond à la formule (I) dans laquelle R¹ = R² = R³ = R⁴ = C₂H₅), le *N,N,N',N'*-tétrapropyldiglycolamide (ou TPDGA, qui répond à la formule (I) dans laquelle R¹ = R² = R³ = R⁴ = C₃H₇) et l'acide N,N-dipropyl-diglycolamique (ou DPDGAc, qui répond à la formule (II) dans laquelle R¹ = R² = C₃H₇).

Parmi ces diglycolamides, le TEDGA et le TPDGA se sont révélés présenter un pouvoir complexant des actinides(IV) plus élevé que celui du TMDGA et du DPDGAc. Aussi, préférence est-elle donnée au TEDGA et au TPDGA, le TEDGA étant tout particulièrement préféré parce que, de ces deux diglycolamides, il est celui qui est le plus soluble dans l'eau et le moins extractible par l'extractant le plus classiquement utilisé dans le traitement des combustibles nucléaires usés, à savoir le TBP.

Quoi qu'il en soit, le diglycolamide est avantageusement présent dans la phase aqueuse à une concentration allant de 0,01 à 0,1 mol/L et, mieux encore, de 0,02 à 0,05 mol/L.

Quant à l'acide nitrique, il est de préférence présent dans cette phase aqueuse à hauteur de 0,2 à 3 mol/L et, mieux encore, de 0,5 à 1,5 mol/L.

Selon une disposition préférée du procédé de l'invention, la décontamination de l'uranium(VI) en l'actinide(IV) ou les actinides(IV) comprend de plus une opération de lavage de la phase aqueuse issue de la désextraction de l'actinide(IV) ou des actinides(IV), par mise en contact de cette phase aqueuse avec une phase organique comprenant un extractant de l'uranium(VI), puis séparation de la phase organique de la phase aqueuse.

Cette opération de lavage, qui est destinée à retirer de la phase aqueuse issue de la désextraction de l'actinide(IV) ou des actinides(IV) la fraction d'uranium(VI) susceptible d'avoir été désextraite conjointement avec cet actinide(IV) ou ces actinides(IV), est, de préférence, réalisée en utilisant une phase organique comprenant du TBP comme extractant, auquel cas ce dernier est typiquement utilisé en solution dans un diluant organique du type dodécane, de préférence dans un rapport volumique égal ou sensiblement égal à 30/70.

L'ensemble formé par les opérations de désextraction de l'actinide(IV) ou des actinides(IV) et de lavage de la phase aqueuse issue de cette désextraction sera dénommé ci-après « *barrage α-complexant* ».

Conformément à l'invention, l'actinide(IV) ou les actinides(IV) sont de préférence choisis parmi le neptunium(IV), le plutonium(IV) et le thorium(IV) et, plus spécialement, parmi le neptunium(IV) et le plutonium(IV).

Selon un premier mode de mise en oeuvre préféré du procédé de l'invention, la décontamination de l'uranium(VI) en un ou plusieurs actinides(IV) est une décontamination de l'uranium(VI) en neptunium(IV).

Selon une première disposition de ce premier mode de mise en oeuvre préféré, le procédé de l'invention résulte de l'introduction d'un « *barrage alpha-complexant* » dans le premier cycle de purification d'un procédé PUREX afin de décontaminer l'uranium(VI) en neptunium(IV) au cours de l'étape de partition de l'uranium et du plutonium, auquel cas le procédé de l'invention comprend de préférence :
a) une étape de décontamination de l'uranium et du plutonium présents dans une phase aqueuse résultant de la dissolution d'un combustible nucléaire usé dans de l'acide nitrique, vis-à-vis des actinides(III) et des produits de fission également présents dans cette phase, laquelle étape comprend :
   a₁) au moins une opération de co-extraction de l'uranium, à l'état d'oxydation VI, et du plutonium, à l'état d'oxydation IV, de la phase aqueuse, par mise en contact de cette phase aqueuse avec une phase organique comprenant du TBP dans un diluant organique, puis séparation de la phase organique de la phase aqueuse ; et
   a₂) au moins une opération de lavage de la phase organique issue de a₁) pour retirer de cette phase aqueuse la fraction de produits de fission ayant été extraite au cours de a₁), par mise en contact de ladite phase organique avec une phase aqueuse comprenant de l'acide nitrique, puis séparation de la phase organique de la phase aqueuse ;
   moyennant quoi on obtient une phase organique qui comprend de l'uranium(VI), du plutonium(IV) et du neptunium(VI) ;
b) une étape de partition de l'uranium et du plutonium présents dans la phase organique issue de l'étape a) en deux phases aqueuses, une première phase aqueuse comprenant du plutonium décontaminé en uranium et en neptunium et une deuxième phase aqueuse comprenant de l'uranium décontaminé en plutonium et en neptunium, laquelle étape comprend :
   b₁) une opération de désextraction du plutonium présent dans la phase organique issue de l'étape a), le plutonium étant désextrait à l'état d'oxydation III par mise en contact de la phase organique issue de l'étape a) avec une phase aqueuse comprenant de l'acide nitrique, un agent réducteur, par exemple du nitrate d'uranyle, qui réduit le plutonium(IV) en plutonium(III) et le neptunium(VI) en neptunium(IV) sans réduire l'uranium(VI), et un agent anti-nitreux, par exemple du nitrate d'hydrazinium, puis séparation de la phase organique de la phase aqueuse ;
   b₂) une opération de lavage de la phase organique issue de b₁) pour retirer de cette phase organique la fraction de plutonium n'ayant pas été désextraite au cours de b₁), par mise en contact de ladite phase organique avec une phase aqueuse comprenant de l'acide nitrique, le même agent réducteur et le même agent anti-nitreux que ceux utilisés pour la désextraction du plutonium, puis séparation de la phase organique de la phase aqueuse ;
   b₃) une opération de lavage de la phase aqueuse issue de b₁) pour retirer de cette phase aqueuse la fraction d'uranium(VI) et de neptunium(IV) ayant été désextraite au cours de b₁), par mise en contact de ladite phase aqueuse avec une phase organique comprenant du TBP dans un diluant organique, puis séparation de la phase organique de la phase aqueuse ;
   b₄) la décontamination de l'uranium(VI) en neptunium(IV), cette décontamination comprenant une opération de désextraction du neptunium(IV) présent dans la phase organique issue de b₂), par mise en contact de cette phase organique avec une phase aqueuse comprenant de l'acide nitrique et le diglycolamide, puis séparation de la phase organique de la phase aqueuse, et une opération de lavage de la phase aqueuse issue de l'opération de désextraction du neptunium(IV), par mise en contact de cette phase aqueuse avec une phase organique comprenant du TBP dans un diluant organique, puis séparation de la phase organique de la phase aqueuse ; et
   b₅) une opération de désextraction de l'uranium(VI) présent dans la phase organique issue de l'opération de désextraction du neptunium(IV) de b₄), par mise en contact de cette phase organique avec une phase aqueuse comprenant de l'acide nitrique, puis séparation de la phase organique de la phase aqueuse.

On obtient ainsi une première phase aqueuse qui comprend du plutonium(III) décontaminé en uranium et en neptunium et qui est celle issue de b₃), une deuxième phase aqueuse qui comprend de l'uranium(VI) décontaminé en plutonium et en neptunium et qui est celle issue de b₅), et une troisième phase aqueuse qui comprend du neptunium(IV) et qui est celle issue de b₄).

Selon une autre disposition de ce premier mode de mise en oeuvre préféré, le procédé de l'invention résulte de l'introduction d'un « *barrage alpha-complexant* » dans le premier cycle de purification d'un procédé COEX™ afin de décontaminer l'uranium(VI) en neptunium(IV) au cours de la partition de l'uranium et du plutonium, auquel cas le procédé de l'invention comprend de préférence :
a) une étape de décontamination de l'uranium et du plutonium présents dans une phase aqueuse résultant de la dissolution d'un combustible nucléaire usé dans de l'acide nitrique, vis-à-vis des actinides(III) et des produits de fission également présents dans cette phase, laquelle étape est identique à l'étape a) précédemment décrite et conduit, comme elle, à une phase organique qui comprend de l'uranium(VI), du plutonium(IV) et du neptunium(VI) ;
b) une étape de partition de l'uranium et du plutonium présents dans la phase organique issue de l'étape a) en deux phases aqueuses, une première phase aqueuse comprenant du plutonium et de l'uranium décontaminés en neptunium et une deuxième phase aqueuse comprenant de l'uranium décontaminé en plutonium et en neptunium, laquelle étape comprend :
   b₁) une opération de désextraction du plutonium et d'une fraction de l'uranium présents dans la phase organique issue de l'étape a), le plutonium étant désextrait à l'état d'oxydation III par mise en contact de la phase organique issue de l'étape a) avec une phase aqueuse comprenant de l'acide nitrique, un agent réducteur, par exemple du nitrate d'uranyle, qui réduit le plutonium(IV) en plutonium(III) et le neptunium(VI) en neptunium(IV) sans réduire l'uranium(VI), et un agent anti-nitreux, par exemple du nitrate d'hydrazinium, puis séparation de la phase organique de la phase aqueuse ;
   b₂) une opération de lavage de la phase organique issue de b₁) pour retirer de cette phase organique la fraction de plutonium n'ayant pas été désextraite au cours de b₁), par mise en contact de ladite phase organique avec une phase aqueuse comprenant de l'acide nitrique, le même agent réducteur et le même agent anti-nitreux que ceux utilisés pour l'opération de désextraction du plutonium, puis séparation de la phase organique de la phase aqueuse ;
   b₃) une opération de lavage de la phase aqueuse issue de b₁) pour retirer de cette phase aqueuse la fraction de neptunium(IV) ayant été désextraite au cours de b₁), par mise en contact de cette phase aqueuse avec une phase organique comprenant du TBP dans un diluant organique, puis séparation de la phase organique de la phase aqueuse ;
   b₄) la décontamination de l'uranium(VI) en neptunium(IV), cette décontamination comprenant une opération de désextraction du neptunium(IV) présent dans la phase organique issue de b₂), par mise en contact de cette phase organique avec une phase aqueuse comprenant de l'acide nitrique et le diglycolamide, puis séparation de la phase organique de la phase aqueuse, et une opération de lavage de la phase aqueuse issue de l'opération de désextraction du neptunium(IV) par mise en contact de cette phase aqueuse avec une phase organique comprenant du TBP dans un diluant organique, puis séparation de la phase organique de la phase aqueuse ; et
   b₅) une opération de désextraction de l'uranium présent dans la phase organique issue de l'opération de désextraction du neptunium(IV) de b₄), par mise en contact de cette phase organique avec une phase aqueuse comprenant de l'acide nitrique, puis séparation de la phase organique de la phase aqueuse.

On obtient ainsi une première phase aqueuse qui comprend du plutonium(III) et de l'uranium(VI) décontaminés en neptunium et qui est celle issue de b₃), une deuxième phase aqueuse qui comprend de l'uranium(VI) décontaminé en neptunium et en plutonium et qui est celle issue de b₅), et une troisième phase aqueuse qui comprend du neptunium(IV) et qui est celle issue de b₄).

Selon un deuxième mode de mise en oeuvre préféré du procédé de l'invention, la décontamination de l'uranium(VI) en un ou plusieurs actinides(IV) est une décontamination de l'uranium(VI) en neptunium(IV) et en plutonium(IV).

Selon une première disposition de ce deuxième mode de mise en oeuvre préféré, le procédé de l'invention résulte de l'introduction d'un « *barrage alpha-complexant* » dans le premier cycle de purification d'un procédé PUREX afin de décontaminer l'uranium(VI) en neptunium(IV) et en plutonium(IV) au cours de la partition de l'uranium et du plutonium, auquel cas le procédé de l'invention comprend de préférence :
a) une étape de décontamination de l'uranium et du plutonium présents dans une phase aqueuse résultant de la dissolution d'un combustible nucléaire usé dans de l'acide nitrique, vis-à-vis des actinides(III) et des produits de fission également présents dans cette phase, laquelle étape est identique à l'étape a) précédemment décrite et conduit, comme elle, à une phase organique qui comprend de l'uranium(VI), du plutonium(IV) et du neptunium(VI) ;
b) une étape de partition de l'uranium et du plutonium présents dans la phase organique issue de l'étape a) en deux phases aqueuses, une première phase aqueuse comprenant du plutonium décontaminé en uranium et en neptunium et une deuxième phase aqueuse comprenant de l'uranium décontaminé en plutonium et en neptunium, laquelle étape comprend :
   b₁) une opération de désextraction du plutonium présent dans la phase organique issue de l'étape a), le plutonium étant désextrait à l'état d'oxydation III par mise en contact de la phase organique issue de l'étape a) avec une phase aqueuse comprenant de l'acide nitrique, un agent réducteur, par exemple du nitrate d'uranyle, qui réduit le plutonium(IV) en plutonium(III) et le neptunium(VI) en neptunium(IV) sans réduire l'uranium(VI), et un agent anti-nitreux, par exemple du nitrate d'hydrazinium, puis séparation de la phase organique de la phase aqueuse ;
   b₂) une opération de lavage de la phase aqueuse issue de b₁) pour retirer de cette phase la fraction d'uranium(VI) et de neptunium(IV) ayant été désextraite au cours de b₁), par mise en contact de cette phase aqueuse avec une phase organique comprenant du TBP dans un diluant organique, puis séparation de la phase organique de la phase aqueuse ;
   b₃) la décontamination de l'uranium(VI) en neptunium(IV) et en plutonium(IV), cette décontamination comprenant une opération de désextraction du neptunium(IV) et du plutonium(IV) présents dans la phase organique issue de b₁), par mise en contact de cette phase organique avec une phase aqueuse comprenant de l'acide nitrique et le diglycolamide, puis séparation de la phase organique de la phase aqueuse, et une opération de lavage de la phase aqueuse issue de l'opération de désextraction du neptunium(IV) par mise en contact de cette phase aqueuse avec une phase organique comprenant du TBP dans un diluant organique, puis séparation de la phase organique de la phase aqueuse ; et
   b₄) une opération de désextraction de l'uranium présent dans la phase organique issue de l'opération de désextraction du neptunium(IV) et du plutonium(IV) de b₃), par mise en contact de cette phase organique avec une phase aqueuse comprenant de l'acide nitrique, puis séparation de la phase organique de la phase aqueuse.

On obtient ainsi une première phase aqueuse qui comprend du plutonium(III) décontaminé en uranium et en neptunium et qui est celle issue de b₂), une deuxième phase aqueuse qui comprend de l'uranium(VI) décontaminé en neptunium et en plutonium et qui est celle issue de b₄), et une troisième phase aqueuse qui comprend du neptunium(IV) et du plutonium(IV) décontaminés en uranium(VI) et qui est celle issue de b₃).

Selon une autre disposition de ce deuxième mode de mise en oeuvre préféré, le procédé de l'invention résulte de l'introduction d'un « *barrage alpha-complexant* » dans le premier cycle de purification d'un procédé COEX™ afin de décontaminer l'uranium(VI) en neptunium(IV) et en plutonium(IV) au cours de la partition de l'uranium et du plutonium, auquel cas le procédé de l'invention comprend de préférence :
a) une étape de décontamination de l'uranium et du plutonium présents dans une phase aqueuse résultant de la dissolution d'un combustible nucléaire usé dans de l'acide nitrique, vis-à-vis des actinides(III) et des produits de fission également présents dans cette phase, laquelle étape est identique à l'étape a) précédemment décrite et conduit, comme elle, à une phase organique qui comprend de l'uranium(VI), du plutonium(IV) et du neptunium(VI) ;
b) une étape de partition de l'uranium et du plutonium présents dans la phase organique issue de l'étape a) en deux phases aqueuses, une première phase aqueuse comprenant du plutonium et de l'uranium décontaminés en neptunium et une deuxième phase aqueuse comprenant de l'uranium décontaminé en neptunium et en plutonium, laquelle étape comprend :
   b₁) une opération de désextraction du plutonium et d'une fraction de l'uranium présents dans la phase organique issue de l'étape a), le plutonium étant désextrait à l'état d'oxydation III par mise en contact de la phase organique issue de l'étape a) avec une phase aqueuse comprenant de l'acide nitrique, un agent réducteur, par exemple du nitrate d'uranyle, qui réduit le plutonium(VI) en plutonium(III) et le neptunium(VI) en neptunium(IV) sans réduire l'uranium(VI), et un agent anti-nitreux, par exemple du nitrate d'hydrazinium, puis séparation de la phase organique de la phase aqueuse ;
   b₂) une opération de lavage de la phase aqueuse issue de b₁) pour retirer de cette phase aqueuse la fraction de neptunium(IV) ayant été désextraite au cours de b₁), par mise en contact de ladite phase aqueuse avec une phase organique comprenant du TBP dans un diluant organique, puis séparation de la phase organique de la phase aqueuse ;
   b₃) la décontamination de l'uranium(VI) en neptunium(IV) et en plutonium(IV), cette décontamination comprenant une opération de désextraction du neptunium(IV) et du plutonium(IV) présents dans la phase organique issue de b₁), par mise en contact de cette phase organique avec une phase aqueuse comprenant de l'acide nitrique et le diglycolamide, puis séparation de la phase organique de la phase aqueuse, et une opération de lavage de la phase aqueuse issue de l'opération de désextraction du neptunium(IV) par mise en contact de cette phase aqueuse avec une phase organique comprenant du TBP dans un diluant organique, puis séparation de la phase organique de la phase aqueuse ; et
   b₄) une opération de désextraction de l'uranium présent dans la phase organique issue de l'opération de désextraction du neptunium(IV) de b₃), par mise en contact de cette phase organique avec une phase aqueuse comprenant de l'acide nitrique, puis séparation de la phase organique de la phase aqueuse.

On obtient ainsi une première phase aqueuse qui comprend du plutonium(III) et de l'uranium(VI) décontaminés en neptunium et qui est celle issue de b₂), une deuxième phase aqueuse qui comprend de l'uranium(VI) décontaminé en neptunium et en plutonium et qui est celle issue de b₄), et une troisième phase aqueuse qui comprend du neptunium(IV) et du plutonium(IV) décontaminés en uranium(VI) et qui est celle issue de b₃).

Dans tous les cas, l'opération de désextraction du neptunium(IV) ou de désextraction du neptunium(IV) et du plutonium(IV) est, de préférence, réalisée avec une solution aqueuse comprenant de 0,2 à 3 mol/L d'acide nitrique et de 0,01 à 0,1 mol/L de TEDGA.

Par ailleurs, l'opération de désextraction de l'uranium (c'est-à-dire l'opération correspondant à b₅) dans le premier mode de mise en oeuvre préféré de l'invention et à b₄) dans le deuxième mode de mise en oeuvre préféré de l'invention) est, de préférence, réalisée avec une solution aqueuse comprenant de 0,005 à 0,05 mol/L d'acide nitrique et à une température de 45 à 55°C.

D'autres caractéristiques et avantages de l'invention ressortiront du complément de description qui suit et qui se rapporte à des exemples de mise en oeuvre du procédé de l'invention ainsi qu'à des essais expérimentaux ayant permis de valider ce procédé.

Il va de soi que ces exemples ne sont donnés qu'à titre d'illustrations de l'objet de l'invention et ne doivent en aucun cas être interprétés comme une limitation de cet objet.

### BRÈVE DESCRIPTION DES FIGURES

La figure 1, déjà commentée, représente un schéma simplifié du premier cycle de purification du procédé PUREX tel qu'il est mis en oeuvre dans les usines de La Hague en France.

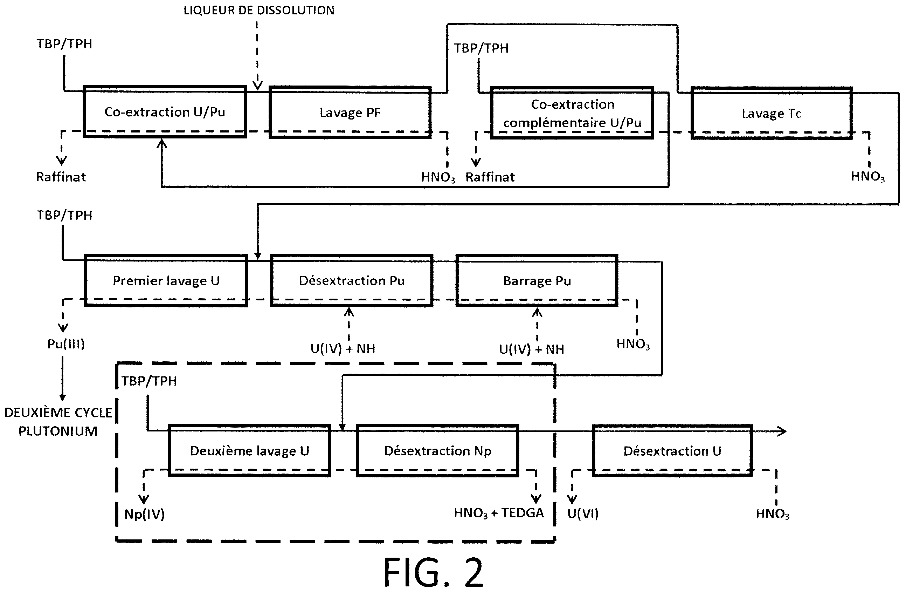

La figure 2 représente un schéma simplifié d'un premier exemple de mise en oeuvre du procédé de l'invention, dans lequel ce dernier résulte de l'introduction d'un « *barrage α-complexant* » dans le premier cycle de purification du procédé PUREX illustré sur la figure 1 afin de décontaminer l'uranium(VI) en neptunium(IV) au cours de la partition de l'uranium et du plutonium.

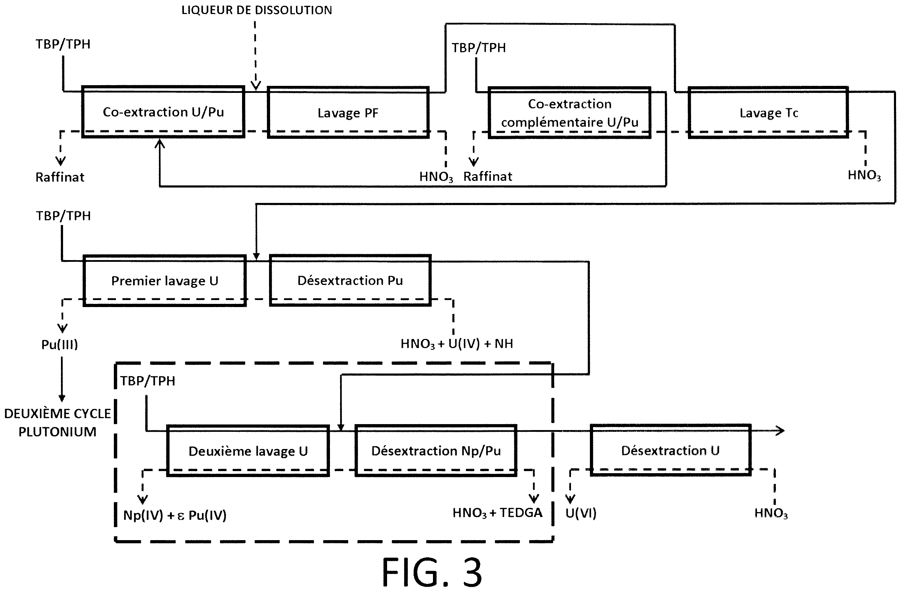

La figure 3 représente un schéma simplifié d'un deuxième exemple de mise en oeuvre du procédé de l'invention, dans lequel ce dernier résulte de la substitution du « *barrage Pu* » par un « *barrage α-complexant* » dans le premier cycle de purification du procédé PUREX illustré sur la figure 1 afin de décontaminer l'uranium(VI) en neptunium(IV) et en plutonium(IV) au cours de la partition de l'uranium et du plutonium.

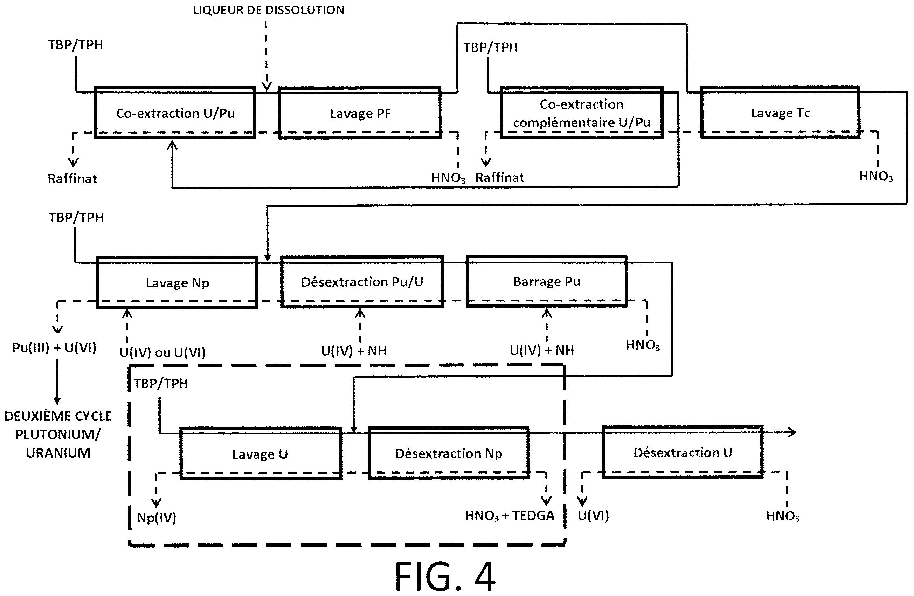

La figure 4 représente un schéma simplifié d'un troisième exemple de mise en oeuvre du procédé de l'invention, dans lequel ce dernier résulte de l'introduction d'un « *barrage α-complexant* » dans le premier cycle de purification du procédé COEX™ tel qu'illustré sur la figure 1 de la référence **[1]** afin de décontaminer l'uranium(VI) en neptunium(IV) au cours de la partition de l'uranium et du plutonium.

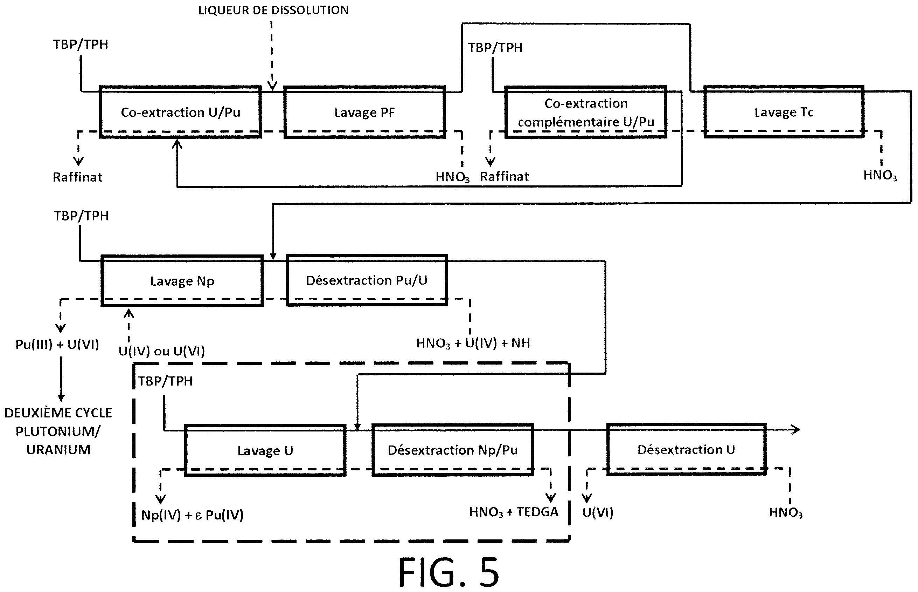

La figure 5 représente un schéma simplifié d'un quatrième exemple de mise en oeuvre du procédé de l'invention, dans lequel ce dernier résulte de la substitution du « *barrage Pu* » par un « *barrage α-complexant* » dans le premier cycle de purification du procédé COEX™ tel qu'illustré sur les figures 1 et 4 de la référence **[1]** afin de décontaminer l'uranium(VI) en neptunium(IV) et plutonium(IV) au cours de la partition de l'uranium et du plutonium.

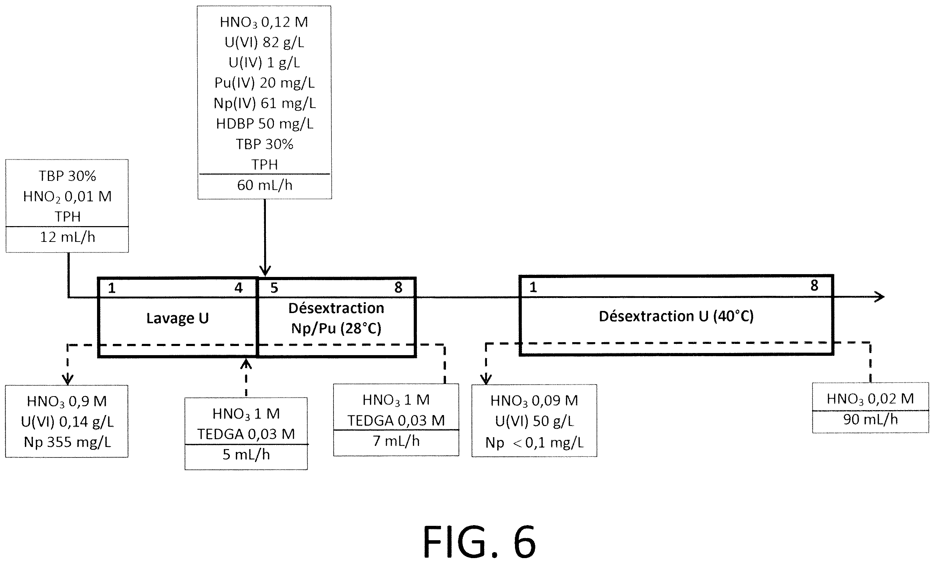

La figure 6 représente le schéma utilisé pour des essais expérimentaux de mise en oeuvre d'un « *barrage α-complexant* » en batteries de mélangeurs-décanteurs.

Sur les figures 1 à 5, les rectangles représentent des extracteurs multiétagés tels que ceux classiquement utilisés dans le traitement des combustibles nucléaires usés (mélangeurs-décanteurs, colonnes pulsées, extracteurs centrifuges) ; les phases organiques entrant ou sortant de ces extracteurs sont symbolisées par des traits pleins tandis que les phases aqueuses entrant ou sortant de ces extracteurs sont symbolisées par des traits en pointillés.

Par ailleurs, sur les figures 2 à 5, le « *barrage α-complexant* » que comportent les exemples de mise en oeuvre du procédé de l'invention illustrés sur ces figures est inscrit dans un cadre en pointillés de manière à le rendre plus visible.

### EXPOSÉ DÉTAILLÉ DE MODES DE MISE EN OEUVRE PARTICULIERS

On se réfère tout d'abord à la figure 2 qui représente un premier exemple de mise en oeuvre du procédé de l'invention.

Dans cet exemple, le procédé de l'invention résulte de l'introduction d'un « *barrage α-complexant* » dans le premier cycle de purification du procédé PUREX illustré sur la figure 1 en vue de décontaminer l'uranium(VI) en neptunium(IV) au cours de la partition de l'uranium et du plutonium.

Le « *barrage α-complexant* est donc utilisé en complément du *« barrage Pu ».*

Le procédé de l'invention comprend, tout d'abord, une étape de décontamination de l'uranium et du plutonium en américium, curium et produits de fission, semblable à celle qui existe dans le premier cycle de purification du procédé PUREX.

Cette première étape comprend :
- une opération, dénommée « *co-extraction U*/*Pu* », qui vise à extraire conjointement l'uranium et le plutonium, le premier à l'état d'oxydation (VI), le second à l'état d'oxydation (IV), d'une liqueur de dissolution, par mise en contact de cette liqueur avec une phase organique comprenant du TBP en solution à 30% environ (v/v) dans un diluant organique, par exemple un dodécane comme le TPH, puis séparation des deux phases ;
- une opération, dénommée « *lavage PF* », qui vise à retirer de la phase organique issue de la « *co-extraction U*/*Pu* » la fraction des produits de fission, en particulier de ruthénium et de zirconium, ayant été extraite au cours de cette co-extraction, par mise en contact de cette phase organique avec une phase aqueuse nitrique d'acidité modérée, par exemple une solution aqueuse d'acide nitrique 1 à 3 M, puis séparation des deux phases ;
- une opération, dénommée « *lavage Tc* », qui vise à retirer de la phase organique issue du « *Lavage PF* » la fraction de technétium ayant été extraite au cours de la « *co-extraction U*/*Pu* », par mise en contact de cette phase organique avec une phase aqueuse nitrique d'acidité modérée mais plus élevée que celle de la phase aqueuse nitrique utilisée pour le « *lavage PF* », par exemple une solution aqueuse d'acide nitrique 3 à 5 M, puis séparation des deux phases ; et
- une opération, dénommée « *co-extraction complémentaire U*/*Pu »,* qui vise à récupérer en phase organique les fractions d'uranium et de plutonium ayant suivi le technétium en phase aqueuse au cours du « *lavage Tc* », par mise en contact de la phase aqueuse issue de ce lavage avec une phase organique comprenant également du TBP en solution à 30% environ (v/v) dans un diluant organique, puis séparation des deux phases.

On obtient ainsi quatre phases :
- les deux phases aqueuses (ou raffinats) issues des « *co-extraction U*/*Pu* » et « *co-extraction complémentaire U*/*Pu* », qui sont chargées en produits de fission et pour la première d'entre elles, en américium et en curium, et qui sont éliminées du cycle ;
- la phase organique issue de la « *co-extraction complémentaire U*/*Pu* », qui est envoyée vers l'extracteur où se déroule la « *co-extraction U*/*Pu* » pour être ajoutée à la phase organique circulant dans cet extracteur ; et
- la phase organique issue du « *lavage Tc* », qui est chargée en uranium(VI), en plutonium(IV) mais également en neptunium(VI) puisque la majeure partie du neptunium présent dans la liqueur de dissolution est extraite par le TBP.

Comme dans le premier cycle de purification du procédé PUREX, cette phase organique est dirigée vers une zone au niveau de laquelle est réalisée une étape de partition de l'uranium et du plutonium en deux phases aqueuses. Par contre, cette étape de partition est réalisée différemment de celle du premier cycle de purification du procédé PUREX puisqu'elle comprend un « *barrage α-complexant* » entre le « *barrage Pu* » et la « *désextraction U* ».

Aussi, comme visible sur la figure 2, l'étape de partition comprend-elle :
- une opération, dénommée « *désextraction Pu* », qui vise à désextraire le plutonium de la phase organique issue du « *lavage Tc* », par mise en contact de cette phase organique avec une phase aqueuse nitrique de faible acidité, par exemple une solution aqueuse d'acide nitrique 0,05 à 2 M, comprenant, d'une part, un agent réducteur, par exemple du nitrate uraneux (ou U(IV)), et, d'autre part, un agent anti-nitreux, par exemple du nitrate d'hydrazinium, puis séparation des deux phases; l'agent réducteur sert à réduire le plutonium(IV) en plutonium(III) et le neptunium(VI) en neptunium(IV) et ce, sans réduire l'uranium(VI), tandis que l'agent anti-nitreux sert à stabiliser à la fois l'agent réducteur et le plutonium(III) par destruction de l'acide nitreux qui tend à se former dans la phase aqueuse ;
- une opération, dénommée « *barrage Pu* », qui vise à parfaire la désextraction du plutonium, par mise en contact de la phase organique issue de la *« Désextraction Pu »* avec une phase aqueuse nitrique de faible acidité, par exemple une solution aqueuse d'acide nitrique 0,05 à 2 M, comprenant le même agent réducteur et le même agent anti-nitreux que ceux utilisés pour la « *désextraction Pu* », puis séparation des deux phases ;
- une opération, dénommée « *premier Lavage U* », qui vise à retirer de la phase aqueuse issue de la « *désextraction Pu* » la fraction d'uranium ayant été désextraite conjointement avec le plutonium, par mise en contact de cette phase aqueuse avec une phase organique comprenant également du TBP en solution à 30% environ (v/v) dans un diluant organique, puis séparation des deux phases ;

- une opération, dénommée « *désextraction Np* », qui vise à désextraire le neptunium(IV) présent dans la phase organique issue du « *barrage Pu »,* par mise en contact de cette phase organique avec une phase aqueuse nitrique, par exemple une solution aqueuse d'acide nitrique 0,2 à 3 M, qui comprend un diglycolamide, par exemple du TEDGA à une concentration de 0,01 à 0,1 mol/L, puis séparation des deux phases;
- une opération, dénommée « *deuxième Lavage U* », qui vise à retirer de la phase aqueuse issue de la « *désextraction Np* » la fraction d'uranium ayant été désextraite conjointement avec le neptunium, par mise en contact de cette phase aqueuse avec une phase organique comprenant également du TBP en solution à 30% environ (v/v) dans un diluant organique, puis séparation des deux phases ; et
- une opération, dénommée « *désextraction U* », qui vise à désextraire l'uranium de la phase organique issue de la « *désextraction Np* », par mise en contact de cette phase organique avec une phase aqueuse nitrique très diluée, par exemple une solution aqueuse d'acide nitrique 0,005 à 0,05 M, puis séparation des deux phases.

On obtient ainsi quatre phases, à savoir :
- la phase aqueuse issue du « *premier lavage U* », qui comprend du plutonium(III) décontaminé en uranium et en neptunium et qui peut être dirigée, après une opération d'oxydation (non représentée sur la figure 2) permettant de ramener le plutonium à l'état d'oxydation IV, vers le « *deuxième cycle plutonium* » en vue de parfaire la décontamination de ce plutonium vis-à-vis des produits de fission susceptibles d'être encore présents dans cette phase aqueuse ;
- la phase aqueuse issue du « *deuxième lavage U* », qui comprend du neptunium décontaminé en uranium et en plutonium et qui peut être éliminée du cycle ;
- la phase aqueuse issue de la « *désextraction U* », qui comprend de l'uranium(VI) décontaminé en plutonium et en neptunium et qui peut être dirigée vers une unité de conversion de l'uranium en oxyde d'uranium propre à entrer dans la fabrication de combustibles nucléaires neufs, sous réserve que la décontamination de cet uranium vis-à-vis des produits de fission soit suffisante; et
- la phase organique issue de la « *désextraction U* », qui peut être dirigée vers une unité de lavage et de régénération des phases organiques.

Un deuxième exemple de mise en oeuvre du procédé de l'invention, dans lequel ce dernier résulte de l'introduction d'un « *barrage α-complexant* » dans le premier cycle de purification du procédé PUREX illustré sur la figure 1 en vue de décontaminer l'uranium(VI) en neptunium(IV) et en plutonium(IV) au cours de la partition de l'uranium et du plutonium, est illustré sur la figure 3.

Dans cet exemple, le procédé de l'invention diffère de celui qui vient d'être décrit en ce que l'étape de partition ne comprend pas de « *barrage Pu* », celui-ci étant remplacé par le « *barrage α-complexant* ».

Aussi, la phase organique issue de la « *désextraction Pu* », qui comprend de l'uranium(VI), du neptunium(IV) et du plutonium(IV) (ce dernier étant à l'état de traces), est-elle directement soumise à une opération, dénommée « *désextraction Np*/*Pu* », qui vise à désextraire le neptunium(IV) et le plutonium(IV) présents dans cette phase organique, par mise en contact avec une phase aqueuse nitrique de faible acidité, par exemple une solution aqueuse d'acide nitrique 0,2 à 3 M, qui comprend un diglycolamide, par exemple du TEDGA à une concentration de 0,01 à 0,1 mol/L, puis séparation des deux phases.

La phase aqueuse issue de la « *désextraction Np*/*Pu* » est soumise à une opération, dénommée « *deuxième Lavage U* », qui vise à retirer de la phase aqueuse issue de cette désextraction la fraction d'uranium ayant été désextraite conjointement avec le neptunium et le plutonium, par mise en contact de cette phase aqueuse avec une phase organique, comprenant également du TBP en solution dans un diluant organique, puis séparation des deux phases.

La phase organique issue de la « *désextraction Np*/*Pu* » est, elle, soumise à une opération, dénommée « *désextraction U* », qui vise à désextraire l'uranium de cette phase organique, par mise en contact de cette phase organique avec une phase aqueuse nitrique très diluée, par exemple une solution aqueuse d'acide nitrique 0,005 à 0,05 M, puis séparation des deux phases.

Là également, on obtient, à l'issue de l'étape de partition, quatre phases, à savoir :
- la phase aqueuse issue du « *premier lavage U* », qui comprend du plutonium(III) décontaminé en uranium et en neptunium et qui peut être dirigée, après une opération d'oxydation (non représentée sur la figure 3) permettant de ramener ce plutonium à l'état d'oxydation IV, vers le « *deuxième cycle plutonium* » en vue de parfaire la décontamination de ce plutonium vis-à-vis des produits de fission susceptibles d'être encore présents dans cette phase aqueuse ;
- la phase aqueuse issue du « *deuxième lavage U* », qui comprend du neptunium(IV) décontaminé en uranium ainsi que des traces de plutonium(IV) et qui est dirigée soit vers l'extracteur où se déroule la « *co-extraction U*/*Pu* » soit vers l'extracteur où se déroule la « *co-extraction complémentaire U*/*Pu* » pour récupérer les traces de plutonium qu'elle comprend ;
- la phase aqueuse issue de la « *désextraction U* », qui comprend de l'uranium(VI) décontaminé en plutonium et en neptunium et qui peut être dirigée vers une unité de conversion de l'uranium en oxyde d'uranium propre à entrer dans la fabrication de combustibles nucléaires neufs, sous réserve que la décontamination de cet uranium vis-à-vis des produits de fission soit suffisante ; et
- la phase organique issue de la « *désextraction U* », qui peut être dirigée vers une unité de lavage et de régénération des phases organiques.

On se réfère à présent à la figure 4 qui représente un troisième exemple de mise en oeuvre du procédé de l'invention, dans lequel ce dernier résulte de l'introduction d'un « *barrage α-complexant* » dans le premier cycle de purification du procédé COEX™ tel qu'illustré sur les figures 1 et 4 de la référence **[1]** afin de décontaminer l'uranium(VI) en neptunium(IV) au cours de la partition de l'uranium et du plutonium.

Dans cet exemple, le « *barrage α-complexant* » est donc utilisé en complément du « *barrage Pu* ».

Le premier cycle de purification du procédé COEX™ comprend, tout d'abord, une étape de décontamination de l'uranium et du plutonium en produits de fission, américium et curium, qui est réalisée de la même manière que dans le procédé PUREX.

On retrouve donc, dans le présent exemple, les opérations « co-*extraction U*/*Pu », « lavage PF », « lavage Tc* » et « *co-extration U*/*Pu complémentaire* » précédemment décrites, avec la production d'une phase organique, qui est chargée en uranium(VI), en plutonium(IV) mais également en neptunium(VI).

Comme dans le premier cycle du procédé COEX™, cette phase organique est dirigée vers une zone au niveau de laquelle est réalisée une étape de partition de l'uranium et du plutonium en deux phases aqueuses. Toutefois, cette étape de partition est réalisée différemment de celle illustrée sur les figures 1 et 4 de la référence **[1]** puisqu'elle comprend un « *barrage α-complexant* » entre le « *barrage Pu* » et la « *désextraction U* ».

Aussi, comme visible sur la figure 4, l'étape de partition comprend-elle :
- une opération, dénommée « *désextraction Pu*/*U* », qui vise à désextraire de la phase organique issue du « *lavage Tc* » le plutonium(IV) et une fraction de l'uranium(VI) présents dans cette phase, par mise en contact de cette phase organique avec une phase aqueuse d'acidité faible, par exemple une solution d'acide nitrique 0,05 à 2 M, comprenant, d'une part, un agent réducteur, par exemple du nitrate uraneux, et, d'autre part, un agent anti-nitreux, par exemple du nitrate d'hydrazinium, puis séparation des deux phases ;
- une opération, dénommée « *barrage Pu* », qui vise à parfaire la désextraction du plutonium(IV), par mise en contact de la phase organique issue de la *« désextraction Pu*/*U* » avec une phase aqueuse nitrique de faible acidité, par exemple une solution d'acide nitrique 0,05 à 2 M, comprenant le même agent réducteur et le même agent anti-nitreux que ceux utilisés pour la « *désextraction Pu*/*U* », puis séparation des deux phases ;
- une opération, dénommée « *lavage Np* », qui vise à retirer de la phase aqueuse issue de la « *désextraction Pu*/*U* » la fraction de neptunium(IV) ayant été désextraite conjointement avec le plutonium et l'uranium, par mise en contact de cette phase avec une phase organique comprenant du TBP en solution à 30% environ (v/v) dans un diluant organique, puis séparation des deux phases ;

- une opération, dénommée « *désextraction Np* », qui vise à désextraire le neptunium(IV) présent dans la phase organique issue du « *barrage Pu »,* par mise en contact de cette phase organique avec une phase aqueuse nitrique de faible acidité, par exemple une solution aqueuse d'acide nitrique 0,2 à 3 M, qui comprend un diglycolamide, par exemple du TEDGA à une concentration de 0,01 à 0,1 mol/L, puis séparation des deux phases ;
- une opération, dénommée « *lavage U* », qui vise à retirer de la phase aqueuse issue de la « *désextraction Np* » la fraction d'uranium ayant été désextraite conjointement avec le neptunium, par mise en contact de cette phase aqueuse avec une phase organique comprenant également du TBP en solution à 30% environ (v/v) dans un diluant organique, puis séparation des deux phases ; et
- une opération, dénommée « *désextraction U* », qui vise à désextraire l'uranium de la phase organique issue de la « *désextraction Np* », par mise en contact de cette phase organique avec une phase aqueuse nitrique très diluée, par exemple une solution aqueuse d'acide nitrique 0,005 à 0,05 M, puis séparation des deux phases.

On obtient ainsi quatre phases, à savoir :
- la phase aqueuse issue du « *lavage Np* », qui comprend du plutonium(III) et de l'uranium(VI et éventuellement IV) décontaminés en neptunium et qui peut être dirigée, après une opération d'oxydation (non représentée sur la figure 4) permettant de ramener le plutonium(III) à l'état d'oxydation IV et, le cas échéant, l'uranium(IV) à l'état d'oxydation VI, vers le « *deuxième cycle plutonium*/*uranium* » en vue de parfaire la décontamination de ce plutonium et de cet uranium vis-à-vis des produits de fission susceptibles d'être encore présents dans cette phase aqueuse ;
- la phase aqueuse issue du « *lavage U* », qui comprend du neptunium(IV) décontaminé en uranium et en plutonium et qui peut être éliminée du cycle ;
- la phase aqueuse issue de la « *désextraction U* », qui comprend de l'uranium(VI) décontaminé en plutonium et en neptunium et qui peut être dirigée vers une unité de conversion de l'uranium en oxyde d'uranium propre à entrer dans la fabrication de combustibles nucléaires neufs, sous réserve que la décontamination de cet uranium vis-à-vis des produits de fission soit suffisante ; et
- la phase organique issue de la « *désextraction U* », qui peut être dirigée vers une unité de lavage et de régénération des phases organiques.

Un quatrième exemple de mise en oeuvre du procédé de l'invention, dans lequel ce dernier résulte de l'introduction d'un « *barrage α-complexant* » dans le premier cycle de purification du procédé COEX™ tel qu'illustré sur les figures 1 et 4 de la référence **[1]** afin de décontaminer l'uranium(VI) en neptunium(IV) et plutonium(IV) au cours de la partition, est illustré sur la figure 5.

Dans cet exemple, le procédé de l'invention diffère donc de celui qui vient d'être décrit en ce que l'étape de partition ne comprend pas de « *barrage Pu »,* celui-ci étant remplacé par le « *barrage α-complexant* ».

Aussi, la phase organique issue de la « *désextraction Pu*/*U* », qui comprend de l'uranium(VI), du neptunium(IV) et du plutonium(IV) (ce dernier étant à l'état de traces), est-elle directement soumise à une opération, dénommée *« désextraction Np*/*Pu* », qui vise à désextraire le neptunium(IV) et le plutonium(IV) présents dans cette phase organique, par mise en contact avec une phase aqueuse nitrique de faible acidité, par exemple une solution aqueuse d'acide nitrique 0,2 à 3 M, qui comprend un diglycolamide, par exemple du TEDGA à une concentration de 0,01 à 1 mol/L, puis séparation des deux phases.

La phase aqueuse issue de la « *désextraction Np*/*Pu* » est soumise à une opération, dénommée « *lavage U* », qui vise à retirer de la phase aqueuse issue de cette désextraction la fraction d'uranium ayant été désextraite conjointement avec le neptunium et le plutonium, par mise en contact de cette phase aqueuse avec une phase organique, comprenant également du TBP en solution dans un diluant organique, tandis que la phase organique issue de la « *désextraction Np*/*Pu* » est soumise à une opération, dénommée « *désextraction U* », qui vise à désextraire l'uranium de cette phase organique, par mise en contact de cette phase organique avec une phase aqueuse nitrique très diluée, par exemple une solution aqueuse d'acide nitrique 0,005 à 0,05 M, puis séparation des deux phases.

Là également, on obtient, à l'issue de l'étape de partition, quatre phases, à savoir :
- la phase aqueuse issue du « *lavage Np* », qui comprend du plutonium(III) et de l'uranium(VI et éventuellement IV) décontaminés en neptunium et qui peut être dirigée, après une opération d'oxydation (non représentée sur la figure 5) permettant de ramener le plutonium(III) à l'état d'oxydation IV et, le cas échéant, l'uranium(IV) à l'état d'oxydation VI, vers le « *deuxième cycle plutonium*/*uranium* » en vue de parfaire la décontamination de ce plutonium et de cet uranium vis-à-vis des produits de fission susceptibles d'être encore présents dans cette phase aqueuse ;
- la phase aqueuse issue du « *lavage U* », qui comprend du neptunium(IV) décontaminé en uranium ainsi que des traces de plutonium(IV) et qui est dirigée soit vers l'extracteur où se déroule la « *co-extraction U*/*Pu* » soit vers l'extracteur où se déroule la « *co-extraction complémentaire U*/*Pu* » pour récupérer les traces de plutonium qu'elle comprend ;
- la phase aqueuse issue de la « *désextraction U* », qui comprend de l'uranium(VI) décontaminé en plutonium et en neptunium et qui peut être dirigée vers une unité de conversion de l'uranium en oxyde d'uranium propre à entrer dans la fabrication de combustibles nucléaires neufs, sous réserve que la décontamination de cet uranium vis-à-vis des produits de fission soit suffisante ; et
- la phase organique issue de la « *désextraction U* », qui peut être dirigée vers une unité de lavage et de régénération des phases organiques.

L'invention ne se limite nullement aux modes de réalisation qui viennent d'être décrits.

En particulier, il est tout à fait possible que deux opérations successives présentées sur les figures 2 à 5 comme se déroulant dans deux extracteurs multiétagés différents soient réalisés dans le même extracteur multiétagé, une partie de l'extracteur étant alors dévolu au déroulement de la première opération et l'autre partie de l'extracteur étant dévolu au déroulement de la deuxième opération.

Les exemples qui suivent correspondent à des essais expérimentaux qui ont permis de valider le procédé de l'invention. Ces essais sont réalisés en utilisant le TEDGA comme diglycolamide.

### EXEMPLE 1 : Essais expérimentaux en tubes à essai

### 1) Étude à l'équilibre thermodynamique entre les phases organique et aqueuse :

Dans ces essais, on utilise comme phase organique à traiter, une solution de TBP à 30% (v/v) dans du TPH, qui est issue du mélange de solutions organiques concentrées et élémentaires d'uranium(VI), de neptunium 237 à l'état d'oxydation IV et de plutonium(IV), en visant les concentrations suivantes : 80 g/L d'U(VI), 70 mg/L de Np(IV) et 10 mg/L de Pu(IV).

Ces concentrations correspondent à celles que présente typiquement une phase organique à l'issue de l'opération « *désextraction Pu* » du procédé PUREX illustré sur la figure 1, sauf en ce qui concerne le plutonium qui est introduit en excès pour déterminer les facteurs de décontamination en plutonium, notés FD_{Pu}, avec une meilleure précision.

Par ailleurs, un traceur, à savoir du neptunium 239, a été ajouté à la solution organique de Np(IV) afin de mesurer la décontamination en neptunium par spectrométrie y.

Par ailleurs, on utilise comme phases aqueuses, des solutions aqueuses qui sont issues du mélange de solutions aqueuses concentrées et élémentaires d'uranium(VI), d'acide nitrique et de TEDGA, afin de simuler une phase aqueuse telle qu'obtenue à l'équilibre avec la phase organique précédente à l'acidité visée hors Np, Pu et TEDGA. Ces solutions aqueuses comprennent 40 g/L d'U(VI), 1 mol/L d'HNO₃ et une concentration croissante en TEDGA, allant de 0 mol/L à 0,05 mol/L.

Chaque phase aqueuse est mise en contact dans un tube à essai avec un volume équivalent de phase organique (O/A = 1) et le tube est laissé sous agitation vibrante pendant 30 minutes, à température ambiante (∼25°C). Puis les phases en contact sont séparées et analysées par spectrométrie γ et α.

Le tableau I ci-après présente les valeurs des coefficients de distribution du neptunium 237, du neptunium 239 et du plutonium, ainsi que les valeurs des facteurs de décontamination de l'uranium en ces éléments, telles que déterminées à partir des résultats de ces analyses, en fonction de la concentration en TEDGA des phases aqueuses utilisées.

**Tableau I**

| **[TEDGA] (mol/L)** | **D_{Np-237}** | **FD_{Np-237}** | **D_{Np-239}** | **FD_{Np-239}** | **D_{Pu}** | **FD_{Pu}** |
|---|---|---|---|---|---|---|
| 0 | 0,139 | 10 | 0,112 | 10 | 0,65 | 2,5 |
| 0,005 | 0,097 | 10 | 0,1 | 11 | - | - |
| 0,01 | 0,006 | 165 | 0,003 | 304 | - | - |
| 0,03 | 0,003 | 371 | 0,002 | 633 | 0,0125 | 81 |
| 0,05 | 0,008 | 131 | - | - | 0,0108 | 92 |

Ce tableau montre qu'une concentration en TEDGA de 0,005 mol/L conduit, pour le neptunium, à des coefficients de distribution et des facteurs de décontamination qui ne sont pas significativement différents de ceux obtenus en l'absence de TEDGA, ce qui laisse à penser que cette concentration est trop faible pour obtenir une complexation du neptunium par ce ligand.

Par contre, à partir de 0,01 mol/L de TEDGA, les facteurs de décontamination de l'uranium en neptunium augmentent significativement pour atteindre une valeur supérieure à 300 dès cette concentration.

### 2) Étude cinétique :

Dans ces essais, on utilise comme phase organique à traiter, une solution de TBP à 30% (v/v) dans du TPH, qui comprend, comme celle utilisée au point 1) ci-avant, 80 g/L d'uranium(VI), 70 mg/L de neptunium(IV) et 10 mg/L de plutonium(IV), mais qui comprend de plus 50 mg/l d'acide dibutylphosphorique (HDBP), qui est le principal produit de dégradation du TBP, et 1 g/L d'uranium(IV), de sorte à se rapprocher le plus possible de la composition de la phase organique qui est obtenue à l'issue de l'opération « *désextraction Pu* » du procédé PUREX illustré sur la figure 1, sauf en ce qui concerne le plutonium qui, là également, est introduit en excès.

L'HDBP est un composé qui est connu pour ralentir la cinétique de désextraction du plutonium. Quant à l'U(IV), il va, en tant qu'actinide(IV) être complexé par le TEDGA et diminuer la quantité de TEDGA disponible pour complexer le plutonium et le neptunium.

Comme précédemment, cette phase organique est issue du mélange de solutions organiques concentrées et élémentaires d'U(VI), de Np(IV), de Pu(IV), d'HDBP et d'U(IV). Du ²³⁹Np a été, là aussi, ajouté à la solution organique de Np(IV) afin de mesurer la décontamination en neptunium par spectrométrie y.

On utilise comme phase aqueuse, une solution aqueuse qui, comme précédemment, est issue du mélange de solutions aqueuses concentrées et élémentaires d'uranium(VI), d'acide nitrique et de TEDGA, afin de simuler une phase aqueuse telle qu'obtenue à l'équilibre avec la phase organique ci-avant à l'acidité visée hors Np, Pu et TEDGA. Cette solution aqueuse comprend 40 g/L d'U(VI), 1 mol/L d'HNO₃ et 0,03 mol/L de TEDGA.

Cette phase aqueuse est mise en contact dans une cellule en verre à double enveloppe de 25 mL, thermostatée à 25°C, avec une agitation par pale et trébuchet anti-vortex (2000 tr/min), avec un volume équivalent de phase organique (O/A = 1).

Des prélèvements d'échantillons sont effectués à 1, 3, 5, 7, 15 et 30 minutes après la mise en contact des phases aqueuse et organique afin de suivre la cinétique de décontamination de la phase organique en neptunium et plutonium.

Pour chaque échantillon prélevé, les phases en contact sont séparées et analysées par spectrométrie y et α.

Le tableau II ci-après présente les résultats des analyses effectuées sur la phase aqueuse des échantillons. Il indique les activités du neptunium 239 et du plutonium (exprimées en KBq par litre de phase aqueuse) telles que mesurées par spectrométrie y pour le neptunium 239 et par spectrométrie α pour le plutonium, ainsi que les concentrations en plutonium (exprimées en mg/L) telles que mesurées par spectrométrie α, en fonction du temps de contact des phases aqueuse et organique.

**Tableau II**

| **Phase aqueuse** | | | |
|---|---|---|---|
| **Temps de contact** (min) | **[Np-239]** (KBq/L) | **[Pu]** (KBq/L) | **[Pu]** (mg/L) |
| 1 | 600 | 3108 | 9,9 |
| 3 | 619 | 3268 | 10,4 |
| 5 | 637 | 3321 | 10,6 |
| 7 | 678 | 4296 | 13,7 |
| 15 | 605 | 3579 | 11,4 |
| 30 | 689 | 3559 | 11,3 |

Le tableau III ci-après présente, lui, les résultats des analyses effectuées sur la phase organique des échantillons. Il indique les activités du neptunium 239 (exprimées en KBq par litre de phase organique) telles que déterminées par spectrométrie y, les valeurs des coefficients de distribution du neptunium 239 ainsi que les valeurs des facteurs de décontamination de l'uranium en neptunium 239, en fonction du temps de contact des phases aqueuse et organique.

**Tableau III**

| **Phase organique** | | | |
|---|---|---|---|
| **Temps de contact** (min) | **[Np-239]** (KBq/L) | **D_{Np-239}** | **FD_{Np-239}** |
| 0 | 618 | | |
| 3 | 14 | 2,3.10⁻³ | 441 |
| 5 | 7 | 1,1.10⁻³ | 866 |
| 7 | 13 | 1,9.10⁻³ | 468 |
| 15 | 17 | 2,7.10⁻³ | 372 |

Ces tableaux montrent que les valeurs du facteur de décontamination de l'uranium en neptunium 239 sont supérieures à 300 après un seul contact et 3 minutes de contact entre les phase aqueuse et organique.

La cinétique de désextraction du neptunium est rapide et n'est pas limitante, même en présence de 50 mg/L d'HDBP et 1g/L d'U(IV).

### EXEMPLE 2 : Essais expérimentaux en batteries de mélangeurs-décanteurs

Des essais expérimentaux de mise en oeuvre d'un « *barrage α-complexant* » sont réalisés en utilisant deux batteries de mélangeurs-décanteurs de 8 étages chacune, selon le schéma montré sur la figure 6.

La phase organique à traiter comprend : 82 g/L d'uranium(VI), 61 mg/L de neptunium(IV), 20 mg/L de plutonium(IV), 50 mg/L d'HDBP et 30% (v/v) de TBP dans du TPH. Du ²³⁹Np a été ajouté à cette phase afin de mesurer la décontamination en neptunium par spectrométrie y.

La première batterie de mélangeurs-décanteurs est dévolue au « *barrage α-complexant* » et est divisée en deux zones de 4 étages chacune : une première zone, dénommée « *désextraction Np*/*Pu* », pour la désextraction du neptunium(IV) et du plutonium(IV) et une deuxième zone, dénommée « *lavage U* », pour le lavage de la phase aqueuse issue de cette désextraction.

La deuxième batterie de mélangeurs-décanteurs est entièrement dévolue à la désextraction de l'uranium(VI) de la phase organique issue de la première batterie de mélangeurs décanteurs. Elle est donc appelée « *désextraction U* ».

Comme visible sur la figure 6, les solutions d'alimentation de la première batterie de mélangeurs-décanteurs sont :
- la phase organique à traiter qui est introduite à l'étage 5 au débit nominal de 60 mL/h ;
- une phase aqueuse comprenant 1 mol/L d'acide nitrique et 0,03 mol/L de TEDGA, qui est introduite à l'étage 8, au débit nominal de 7 mL/h, et à l'étage 4, au débit nominal de 5 mL/h ; et
- une phase organique qui comprend 30% (v/v) de TBP dilué dans du TPH et 0,01 mol/L d'acide nitreux pour favoriser l'oxydation de l'uranium(IV) présent dans la phase organique à traiter; cette phase organique est introduite à l'étage 1, au débit nominal de 12 mL/h.

La deuxième batterie de mélangeurs-décanteurs est, elle, alimentée, avec, d'une part, la phase organique issue de la « *désextraction Np*/*Pu* » qui est introduite à l'étage 1 et, d'autre part, avec une solution aqueuse comprenant 0,02 mol/L d'acide nitrique, qui est introduite à l'étage 8, au débit nominal de 90 mL/h.

La température régnant dans la première batterie de mélangeurs-décanteurs est de 28°C tandis que celle qui règne dans la deuxième batterie est de 40°C.

Dans ces conditions, l'état stationnaire d'équilibre est atteint au bout de 6 heures environ.

L'activité du neptunium 239 est mesurée par spectrométrie y dans la phase organique à traiter et dans les phases aqueuses issues du « *lavage U* » et de la « *désextraction U* ». De même, les concentrations en uranium(VI), en neptunium(IV) et en plutonium(IV) sont mesurées par Fluorescence-X ou ICP-AES dans chacune de ces phases.

Les résultats de ces mesures sont présentées dans le tableau IV ci-après ainsi que les facteurs de décontamination de l'uranium en neptunium d'une part, et en plutonium d'autre part.

**Tableau IV**

| | **Phase organique à traiter** | **Phase aqueuse issue du « *lavage U* »** | **Phase aqueuse issue de la « *désextraction U* »** | **FD U/Np ou Pu** |
|---|---|---|---|---|
| U (g/L) | 82 | 0,14 | 49,94 | |
| Np(IV) (mg/L) | 61,4 | 355,3 | < 0,1 | > 374 |
| ²³⁹Np (KBq/L) | 3000 | 15 010 | 0,5 | 3654 |
| Pu (mg/L) | 20 | 103 | < 0,1 | > 122 |

Ce tableau montre qu'un facteur de décontamination de l'uranium en neptunium voisin de 3650, soit plus de 10 fois supérieur à celui requis par la spécification la plus sévère ayant été définie à ce jour par les normes UNIREP en matière de décontamination de l'uranium en neptunium et qui est de 308. L'introduction d'un « *barrage α-complexant* » dans un procédé PUREX ou COEX™, selon le schéma montré sur la figure 6, permet donc de s'affranchir de la nécessité d'effectuer le « *deuxième cycle uranium* », sous réserve que la décontamination de l'uranium vis-à-vis des produits de fission soit, par ailleurs, suffisante.

### RÉFÉRENCES CITÉES

[1] WO 2007/135178
[2] WO 2005/052950
[3] Sasaki et al., Analytical Sciences 2007, 23(6), 727
[4] FR 2 907 346 A1

## Revendications

1. Procédé de traitement d'un combustible nucléaire usé, qui comprend une décontamination de l'uranium(VI) en un ou plusieurs actinides(IV), laquelle décontamination comprend au moins une opération de désextraction de l'actinide(IV) ou des actinides(IV) d'une phase organique, non miscible à l'eau et dans laquelle l'uranium(VI) et l'actinide(IV) ou les actinides(IV) sont présents, par mise en contact de la phase organique avec une phase aqueuse comprenant de l'acide nitrique et au moins un agent complexant qui complexe plus fortement les actinides(IV) que l'uranium(VI), puis séparation de la phase organique de la phase aqueuse, et qui est **caractérisé en ce que** ledit au moins un agent complexant est un diglycolamide.

2. Procédé selon la revendication 1, **caractérisé en ce que** le diglycolamide est choisi parmi le *N,N,N',N'*-tétraméthyldiglycolamide, le *N,N,N',N'*-tétraéthyl-diglycolamide, le *N,N,N',N'*-tétrapropyldiglycolamide et l'acide *N,N*-dipropyldiglycol-amique.

3. Procédé selon la revendication 2, **caractérisé en ce que** le diglycolamide est le *N,N,N',N'*-tétraéthyldiglycolamide.

4. Procédé selon l'une quelconque des revendications 1 à 3, **caractérisé en ce que** la phase aqueuse comprend de 0,01 à 0,1 mol/L de diglycolamide.

5. Procédé selon l'une quelconque des revendications 1 à 4, **caractérisé en ce que** la phase aqueuse comprend de 0,2 à 3 mol/L d'acide nitrique.

6. Procédé selon l'une quelconque des revendications 1 à 5, **caractérisé en ce que** la décontamination de l'uranium(VI) en l'actinide(IV) ou les actinides(IV) comprend de plus une opération de lavage de la phase aqueuse issue de la désextraction de l'actinide(IV) ou des actinides(IV), par mise en contact de cette phase aqueuse nitrique avec une phase organique comprenant un extractant de l'uranium(VI), puis séparation de la phase organique de la phase aqueuse.

7. Procédé selon la revendication 6, **caractérisé en ce que** l'extractant est le phosphate de tri-n-butyle.

8. Procédé selon l'une quelconque des revendications 1 à 7, **caractérisé en ce que** l'actinide(IV) ou les actinides(IV) sont choisis parmi le neptunium(IV), le plutonium(IV) et le thorium(IV).

9. Procédé selon l'une quelconque des revendications 1 à 8, **caractérisé en ce que** la décontamination de l'uranium(VI) en un ou plusieurs actinides(IV) est une décontamination de l'uranium(VI) en neptunium(IV).

10. Procédé selon la revendication 9, **caractérisé en ce qu'**il comprend :
a) une étape de décontamination de l'uranium et du plutonium présents dans une phase aqueuse résultant de la dissolution d'un combustible nucléaire usé dans de l'acide nitrique, vis-à-vis des actinides(III) et des produits de fission également présents dans cette phase, laquelle étape comprend :
a₁) au moins une opération de co-extraction de l'uranium, à l'état d'oxydation VI, et du plutonium, à l'état d'oxydation IV, de la phase aqueuse, par mise en contact de cette phase aqueuse avec une phase organique comprenant du phosphate de tri-n-butyle dans un diluant organique, puis séparation de la phase organique de la phase aqueuse ; et
a₂) au moins une opération de lavage de la phase organique issue de a₁) pour retirer de cette phase aqueuse la fraction de produits de fission ayant été extraite au cours de a₁), par mise en contact de ladite phase organique avec une phase aqueuse comprenant de l'acide nitrique, puis séparation de la phase organique de la phase aqueuse ;
moyennant quoi on obtient une phase organique qui comprend de l'uranium(VI), du plutonium(IV) et du neptunium(VI) ;
b) une étape de partition de l'uranium et du plutonium présents dans la phase organique issue de l'étape a) en deux phases aqueuses, une première phase aqueuse comprenant du plutonium décontaminé en uranium et en neptunium et une deuxième phase aqueuse comprenant de l'uranium décontaminé en plutonium et en neptunium, laquelle étape comprend :
b₁) une opération de désextraction du plutonium présent dans la phase organique issue de l'étape a), le plutonium étant désextrait à l'état d'oxydation III par mise en contact de la phase organique issue de l'étape a) avec une phase aqueuse comprenant de l'acide nitrique, un agent réducteur qui réduit le plutonium(IV) en plutonium(III) et le neptunium(VI) en neptunium(IV) sans réduire l'uranium(VI), et un agent anti-nitreux, puis séparation de la phase organique de la phase aqueuse ;
b₂) une opération de lavage de la phase organique issue de b₁) pour retirer de cette phase organique la fraction de plutonium n'ayant pas été désextraite au cours de b₁), par mise en contact de ladite phase organique avec une phase aqueuse comprenant de l'acide nitrique, le même agent réducteur et le même agent anti-nitreux que ceux utilisés pour l'opération de désextraction du plutonium, puis séparation de la phase organique de la phase aqueuse ;
b₃) une opération de lavage de la phase aqueuse issue de b₁) pour retirer de cette phase aqueuse la fraction d'uranium(VI) et de neptunium(IV) ayant été désextraite au cours de b₁), par mise en contact de ladite phase aqueuse avec une phase organique comprenant du phosphate de tri-*n*-butyle dans un diluant organique, puis séparation de la phase organique de la phase aqueuse ;
b₄) la décontamination de l'uranium(VI) en neptunium(IV), cette décontamination comprenant une opération de désextraction du neptunium(IV) présent dans la phase organique issue de b₂), par mise en contact de cette phase organique avec une phase aqueuse comprenant de l'acide nitrique et le diglycolamide, puis séparation de la phase organique de la phase aqueuse, et une opération de lavage de la phase aqueuse issue de l'opération de désextraction du neptunium(IV), par mise en contact de cette phase aqueuse avec une phase organique comprenant du phosphate de tri-*n*-butyle dans un diluant organique, puis séparation de la phase organique de la phase aqueuse ; et
b₅) une opération de désextraction de l'uranium(VI) présent dans la phase organique issue de l'opération de désextraction du neptunium(IV) de b₄), par mise en contact de cette phase organique avec une phase aqueuse comprenant de l'acide nitrique, puis séparation de la phase organique de la phase aqueuse.

11. Procédé selon la revendication 9, **caractérisé en ce qu'**il comprend :
a) une étape de décontamination de l'uranium et du plutonium présents dans une phase aqueuse résultant de la dissolution d'un combustible nucléaire usé dans de l'acide nitrique, vis-à-vis des actinides(III) et des produits de fission également présents dans cette phase, laquelle étape comprend :
a₁) au moins une opération de co-extraction de l'uranium, à l'état d'oxydation VI, et du plutonium, à l'état d'oxydation IV, de la phase aqueuse par mise en contact de cette phase aqueuse avec une phase organique comprenant du phosphate de tri-n-butyle dans un diluant organique, puis séparation de la phase organique de la phase aqueuse ; et
a₂) au moins une opération de lavage de la phase organique issue de a₁) pour retirer de cette phase aqueuse la fraction de produits de fission ayant été extraite au cours de a₁), par mise en contact de cette phase organique avec une phase aqueuse comprenant de l'acide nitrique, puis séparation de la phase organique de la phase aqueuse ;
moyennant quoi on obtient une phase organique qui comprend de l'uranium(VI), du plutonium(IV) et du neptunium(VI) ;
b) une étape de partition de l'uranium et du plutonium présents dans la phase organique issue de l'étape a) en deux phases aqueuses, une première phase aqueuse comprenant du plutonium et de l'uranium décontaminés en neptunium et une deuxième phase aqueuse comprenant de l'uranium décontaminé en plutonium et en neptunium, laquelle étape comprend :
b₁) une opération de désextraction du plutonium et d'une fraction de l'uranium présents dans la phase organique issue de l'étape a), le plutonium étant désextrait à l'état d'oxydation III par mise en contact de la phase organique issue de l'étape a) avec une phase aqueuse comprenant de l'acide nitrique, un agent réducteur qui réduit le plutonium(IV) en plutonium(III) et le neptunium(VI) en neptunium(IV) sans réduire l'uranium(VI), et un agent anti-nitreux, puis séparation de la phase organique de la phase aqueuse ;
b₂) une opération de lavage de la phase organique issue de b₁) pour retirer de cette phase organique la fraction de plutonium n'ayant pas été désextraite au cours de b₁), par mise en contact de ladite phase organique avec une phase aqueuse comprenant de l'acide nitrique, le même agent réducteur et le même agent anti-nitreux que ceux utilisés pour l'opération de désextraction du plutonium, puis séparation de la phase organique de la phase aqueuse ;
b₃) une opération de lavage de la phase aqueuse issue de b₁) pour retirer de cette phase aqueuse la fraction de neptunium(IV) ayant été désextraite au cours de b₁), par mise en contact de cette phase aqueuse avec une phase organique comprenant du phosphate de tri-n-butyle dans un diluant organique, puis séparation de la phase organique de la phase aqueuse ;
b₄) la décontamination de l'uranium(VI) en neptunium(IV), cette décontamination comprenant une opération de désextraction du neptunium(IV) présent dans la phase organique issue de b₂), par mise en contact de cette phase organique avec une phase aqueuse comprenant de l'acide nitrique et le diglycolamide, puis séparation de la phase organique de la phase aqueuse, et une opération de lavage de la phase aqueuse issue de l'opération de désextraction du neptunium(IV) par mise en contact de cette phase aqueuse avec une phase organique comprenant du phosphate de tri-n-butyle dans un diluant organique, puis séparation de la phase organique de la phase aqueuse ; et
b₅) une opération de désextraction de l'uranium présent dans la phase organique issue de l'opération de désextraction du neptunium(IV) de b₄), par mise en contact de cette phase organique avec une phase aqueuse comprenant de l'acide nitrique, puis séparation de la phase organique de la phase aqueuse.

12. Procédé selon la revendication 8, **caractérisé en ce que** l'étape de décontamination de l'uranium(VI) en un ou plusieurs actinides(IV) est une étape de décontamination de l'uranium(VI) en neptunium(IV) et en plutonium(IV).

13. Procédé selon la revendication 12, **caractérisé en ce qu'**il comprend :
a) une étape de décontamination de l'uranium et du plutonium présents dans une phase aqueuse résultant de la dissolution d'un combustible nucléaire usé dans de l'acide nitrique, vis-à-vis des actinides(III) et des produits de fission également présents dans cette phase, laquelle étape comprend :
a₁) au moins une opération de co-extraction de l'uranium, à l'état d'oxydation VI, et du plutonium, à l'état d'oxydation IV, de la phase aqueuse, par mise en contact de cette phase aqueuse avec une phase organique comprenant du phosphate de tri-n-butyle dans un diluant organique, puis séparation de la phase organique de la phase aqueuse ; et
a₂) au moins une opération de lavage de la phase organique issue de a₁), par mise en contact de cette phase organique avec une phase aqueuse comprenant de l'acide nitrique, puis séparation de la phase organique de la phase aqueuse ;
moyennant quoi on obtient une phase organique qui comprend de l'uranium(VI), du plutonium(IV) et du neptunium(IV) ;
b) une étape de partition de l'uranium et du plutonium présents dans la phase organique issue de l'étape a) en deux phases aqueuses, une première phase aqueuse comprenant du plutonium décontaminé en uranium et en neptunium et une deuxième phase aqueuse comprenant de l'uranium décontaminé en plutonium et en neptunium, laquelle étape comprend :
b₁) une opération de désextraction du plutonium présent dans la phase organique issue de l'étape a), le plutonium étant désextrait à l'état d'oxydation III par mise en contact de la phase organique issue de l'étape a) avec une phase aqueuse comprenant de l'acide nitrique, un agent réducteur qui réduit le plutonium(IV) en plutonium(III) et le neptunium(VI) en neptunium(IV) sans réduire l'uranium(VI), et un agent anti-nitreux, puis séparation de la phase organique de la phase aqueuse ;
b₂) une opération de lavage de la phase aqueuse issue de b₁) pour retirer de cette phase la fraction d'uranium(VI) et de neptunium(IV) ayant été désextraite au cours de b₁), par mise en contact de cette phase aqueuse avec une phase organique comprenant du phosphate de tri-n-butyle dans un diluant organique, puis séparation de la phase organique de la phase aqueuse ;
b₃) la décontamination de l'uranium(VI) en neptunium(IV) et en plutonium(IV), cette décontamination comprenant une opération de désextraction du neptunium(IV) et du plutonium(IV) présents dans la phase organique issue de b₁), par mise en contact de cette phase organique avec une phase aqueuse comprenant de l'acide nitrique et le diglycolamide, puis séparation de la phase organique de la phase aqueuse, et une opération de lavage de la phase aqueuse issue de l'opération de désextraction du neptunium(IV) par mise en contact de cette phase aqueuse avec une phase organique comprenant du phosphate de tri-n-butyle dans un diluant organique, puis séparation de la phase organique de la phase aqueuse ; et
b₄) une opération de désextraction de l'uranium présent dans la phase organique issue de l'opération de désextraction du neptunium(IV) et du plutonium(IV) de b₃), par mise en contact de cette phase organique avec une phase aqueuse comprenant de l'acide nitrique, puis séparation de la phase organique de la phase aqueuse.

14. Procédé selon la revendication 12, **caractérisé en ce qu'**il comprend :
a) une étape de décontamination de l'uranium et du plutonium présents dans une phase aqueuse résultant de la dissolution d'un combustible nucléaire usé dans de l'acide nitrique, vis-à-vis des actinides(III) et des produits de fission également présents dans cette phase, laquelle étape comprend :
a₁) au moins une opération de co-extraction de l'uranium, à l'état d'oxydation VI, et du plutonium, à l'état d'oxydation IV, de la phase aqueuse par mise en contact de cette phase aqueuse avec une phase organique comprenant du phosphate de tri-n-butyle dans un diluant organique, puis séparation de la phase organique de la phase aqueuse ; et
a₂) au moins une opération de lavage de la phase organique issue de a₁), par mise en contact de cette phase organique avec une phase aqueuse comprenant de l'acide nitrique, puis séparation de la phase organique de la phase aqueuse ;
moyennant quoi on obtient une phase organique qui comprend de l'uranium(VI), du plutonium(IV) et du neptunium(VI) ;
b) une étape de partition de l'uranium et du plutonium présents dans la phase organique issue de l'étape a) en deux phases aqueuses, une première phase aqueuse comprenant du plutonium et de l'uranium décontaminés en neptunium et une deuxième phase aqueuse comprenant de l'uranium décontaminé en neptunium et en plutonium, laquelle étape comprend :
b₁) une opération de désextraction du plutonium et d'une fraction de l'uranium présents dans la phase organique issue de l'étape a), le plutonium étant désextrait à l'état d'oxydation III par mise en contact de la phase organique issue de l'étape a) avec une phase aqueuse comprenant de l'acide nitrique, un agent réducteur qui réduit le plutonium(IV) en plutonium(III) et le neptunium(VI) en neptunium(IV) sans réduire l'uranium(VI), et un agent anti-nitreux, puis séparation de la phase organique de la phase aqueuse ;
b₂) une opération de lavage de la phase aqueuse issue de b₁) pour retirer de cette phase aqueuse la fraction de neptunium(IV) ayant été désextraite au cours de b₁), par mise en contact de ladite phase aqueuse avec une phase organique comprenant du phosphate de tri-n-butyle dans un diluant organique, puis séparation de la phase organique de la phase aqueuse ;
b₃) la décontamination de l'uranium(VI) en neptunium(IV) et en plutonium(IV), cette décontamination comprenant une opération de désextraction du neptunium(IV) et du plutonium(IV) présents dans la phase organique issue de b₁), par mise en contact de cette phase organique avec une phase aqueuse comprenant de l'acide nitrique et le diglycolamide, puis séparation de la phase organique de la phase aqueuse, et une opération de lavage de la phase aqueuse issue de l'opération de désextraction du neptunium(IV) par mise en contact de cette phase aqueuse avec une phase organique comprenant du phosphate de tri-n-butyle dans un diluant organique, puis séparation de la phase organique de la phase aqueuse ; et
b₄) une opération de désextraction de l'uranium présent dans la phase organique issue de l'opération de désextraction du neptunium(IV) de b₃), par mise en contact de cette phase organique avec une phase aqueuse comprenant de l'acide nitrique, puis séparation de la phase organique de la phase aqueuse.

15. Procédé selon l'une quelconque des revendications 10, 11, 13 et 14, **caractérisé en ce que** la phase aqueuse comprenant de l'acide nitrique et le diglycolamide comprend de 0,2 à 3 mol/L d'acide nitrique et de 0,01 à 0,1 mol/L de *N,N,N',N'-*tétraéthyldiglycolamide.

## Patentansprüche

1. Verfahren zur Behandlung eines abgebrannten Kernbrennstoffs, das eine Dekontamination von Uran(VI) zu einem oder mehreren Actiniden(IV) umfasst, wobei die Dekontamination mindestens einen Arbeitsschritt der Reextraktion des Actinids(IV) oder der Actiniden(IV) aus einer organischen Phase, die mit Wasser nicht mischbar ist und in der das Uran(VI) und das Actinid(IV) oder die Actiniden(IV) vorhanden ist/sind, mittels Inkontaktbringen der organischen Phase mit einer wässrigen Phase, die Salpetersäure und mindestens ein Komplexbildungsmittel umfasst, das Actinide(IV) stärker komplexiert als Uran(VI), und anschließende Abtrennung der organischen Phase von der wässrigen Phase umfasst und **dadurch gekennzeichnet ist, dass** das mindestens eine Komplexbildungsmittel ein Diglykolamid ist.

2. Verfahren nach Anspruch 1, **dadurch gekennzeichnet, dass** das Diglykolamid aus N,N,N',N'-Tetramethyldi-glykolamid, N,N,N',N'-Tetraethyldiglykolamid, N,N,N',N'-Tetrapropyldiglykolamid und N,N-Dipropyldiglykolamin-säure ausgewählt ist.

3. Verfahren nach Anspruch 2, **dadurch gekennzeichnet, dass** das Diglykolamid N,N,N',N'-Tetraethyldiglykolamid ist.

4. Verfahren nach einem der Ansprüche 1 bis 3, **dadurch gekennzeichnet, dass** die wässrige Phase 0,01 bis 0,1 mol/l Diglykolamid umfasst.

5. Verfahren nach einem der Ansprüche 1 bis 4, **dadurch gekennzeichnet, dass** die wässrige Phase 0,2 bis 3 mol/l Salpetersäure umfasst.

6. Verfahren nach einem der Ansprüche 1 bis 5, **dadurch gekennzeichnet, dass** die Dekontamination von Uran(VI) zu dem Actinid(IV) oder den Actiniden(IV) außerdem einen Arbeitsschritt des Waschens der wässrigen Phase, die aus der Reextraktion des Actinids(IV) oder der Actiniden(IV) herrührt, mittels Inkontaktbringen dieser wässrigen Salpetersäure-Phase mit einer organischen Phase, die ein Extraktionsmittel von Uran(VI) umfasst, und anschließende Abtrennung der organischen Phase von der wässrigen Phase umfasst.

7. Verfahren nach Anspruch 6, **dadurch gekennzeichnet, dass** das Extraktionsmittel Tri-n-butylphosphat ist.

8. Verfahren nach einem der Ansprüche 1 bis 7, **dadurch gekennzeichnet, dass** das Actinid(IV) oder die Actiniden(IV) aus Neptunium(IV), Plutonium(IV) und Thorium(IV) ausgewählt ist/sind.

9. Verfahren nach einem der Ansprüche 1 bis 8, **dadurch gekennzeichnet, dass** die Dekontamination von Uran(VI) zu einem oder mehreren Actiniden(IV) eine Dekontamination von Uran(VI) zu Neptunium(IV) ist.

10. Verfahren nach Anspruch 9, **dadurch gekennzeichnet, dass** es Folgendes umfasst:
a) einen Schritt der Dekontamination von Uran und Plutonium, die in einer wässrigen Phase vorhanden sind, die aus dem Lösen eines abgebrannten Kernbrennstoffs in Salpetersäure resultiert, gegenüber Actiniden(III) und Spaltprodukten, die ebenfalls in dieser Phase vorhanden sind, wobei der Schritt Folgendes umfasst:
a₁) mindestens einen Arbeitsschritt der Coextraktion von Uran in der Oxidationsstufe VI und Plutonium in der Oxidationsstufe IV aus der wässrigen Phase durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase; und
a₂) mindestens einen Arbeitsschritt des Waschens der aus a₁) stammenden organischen Phase, um aus dieser wässrigen Phase die während a₁) extrahierte Fraktion der Spaltprodukte zu entfernen, durch Inkontaktbringen der organischen Phase mit einer wässrigen Phase, die Salpetersäure umfasst, und anschließendes Abtrennen der organischen Phase von der wässrigen Phase;
wobei man eine organische Phase erhält, die Uran(VI), Plutonium(IV) und Neptunium(VI) umfasst;
b) einen Schritt der Verteilung von Uran und Plutonium, die in der aus Schritt a) herrührenden organischen Phase vorhanden sind, in zwei wässrigen Phasen, einer ersten wässrigen Phase, die zu Uran und zu Neptunium dekontaminiertes Plutonium umfasst, und einer zweiten wässrigen Phase, die zu Plutonium und zu Neptunium dekontaminiertes Uran umfasst, wobei der Schritt Folgendes umfasst:
b₁) einen Arbeitsschritt der Reextraktion des Plutoniums, das in der aus Schritt a) stammenden organischen Phase vorhanden ist, wobei das Plutonium in der Oxidationsstufe III reextrahiert wird, durch Inkontaktbringen der aus Schritt a) stammenden organischen Phase mit einer wässrigen Phase, die Salpetersäure, ein Reduktionsmittel, das Plutonium(IV) zu Plutonium(III) und Neptunium(VI) zu Neptunium(IV) reduziert, ohne Uran(VI) zu reduzieren, und ein Anti-Salpetersäuremittel umfasst, und anschließendes Abtrennen der organischen Phase von der wässrigen Phase;
b₂) einen Arbeitsschritt des Waschens der aus b₁) stammenden organischen Phase, um aus dieser organischen Phase die Plutoniumfraktion zu entfernen, die während b₁) nicht reextrahiert wurde, durch Inkontaktbringen der organischen Phase mit einer wässrigen Phase, die Salpetersäure, das gleiche Reduktionsmittel und das gleiche Anti-Salpetersäuremittel, wie sie für den Plutoniumreextraktionsschritt verwendet wurden, umfasst, und anschließendes Abtrennen der organischen Phase von der wässrigen Phase;
b₃) einen Arbeitsschritt des Waschens der aus b₁) stammenden wässrigen Phase, um aus dieser wässrigen Phase die Fraktion von Uran(VI) und Neptunium(IV), die während b₁) reextrahiert wurde, zu entfernen, durch Inkontaktbringen der wässrigen Phase mit einer organischen Phase, die Tri-n-butylphosphat in einem organischen Verdünnungsmittel umfasst, und anschließendes Abtrennen der organischen Phase von der wässrigen Phase;
b₄) die Dekontamination von Uran(VI) zu Neptunium(IV), wobei diese Dekontamination einen Arbeitsschritt der Reextraktion des in der aus b₂) stammenden organischen Phase vorhandenen Neptuniums(IV) durch Inkontaktbringen dieser organischen Phase mit einer wässrigen Phase, die Salpetersäure und das Diglykolamid umfasst, und anschließendes Abtrennen der organischen Phase von der wässrigen Phase und einen Arbeitsschritt des Waschens der aus dem Arbeitsschritt der Reextraktion von Neptunium(IV) stammenden wässrigen Phase durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase umfasst; und
b₅) einen Arbeitsschritt der Reextraktion von Uran(VI), das in der aus dem Arbeitsschritt der Reextraktion von Neptunium(IV) von b₄) stammenden organischen Phase vorhanden ist, durch Inkontaktbringen dieser organischen Phase mit einer wässrigen Phase, die Salpetersäure umfasst, und anschließendes Abtrennen der organischen Phase von der wässrigen Phase.

11. Verfahren nach Anspruch 9, **dadurch gekennzeichnet, dass** es Folgendes umfasst:
a) einen Schritt der Dekontamination von Uran und Plutonium, die in einer wässrigen Phase vorhanden sind, die aus dem Lösen eines abgebrannten Kernbrennstoffs in Salpetersäure resultiert, gegenüber Actiniden(III) und Spaltprodukten, die ebenfalls in dieser Phase vorhanden sind, wobei der Schritt Folgendes umfasst:
a₁) mindestens einen Arbeitsschritt der Coextraktion von Uran in der Oxidationsstufe VI und Plutonium in der Oxidationsstufe IV aus der wässrigen Phase durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase; und
a₂) mindestens einen Arbeitsschritt des Waschens der aus a₁) stammenden organischen Phase, um aus dieser wässrigen Phase die Fraktion der Spaltprodukte, die während a₁) extrahiert wurde, zu entfernen, durch Inkontaktbringen dieser organischen Phase mit einer wässrigen Phase, die Salpetersäure umfasst, und anschließendes Abtrennen der organischen Phase von der wässrigen Phase;
wobei man eine organische Phase erhält, die Uran(VI), Plutonium(IV) und Neptunium(VI) umfasst;
b) einen Schritt der Verteilung von Uran und Plutonium, die in der aus Schritt a) herrührenden organischen Phase vorhanden sind, in zwei wässrigen Phasen, einer ersten wässrigen Phase, die zu Neptunium dekontaminiertes Plutonium und Uran umfasst, und einer zweiten wässrigen Phase, die zu Plutonium und zu Neptunium dekontaminiertes Uran umfasst, wobei der Schritt Folgendes umfasst:
b₁) einen Arbeitsschritt der Reextraktion des Plutoniums und einer Fraktion des Urans, die in der aus Schritt a) stammenden organischen Phase vorhanden sind, wobei das Plutonium in der Oxidationsstufe III reextrahiert wird, durch Inkontaktbringen der aus Schritt a) stammenden organischen Phase mit einer wässrigen Phase, die Salpetersäure, ein Reduktionsmittel, das Plutonium(IV) zu Plutonium(III) und Neptunium(VI) zu Neptunium(IV) reduziert, ohne Uran(VI) zu reduzieren, und ein Anti-Salpetersäuremittel umfasst, und anschließendes Abtrennen der organischen Phase von der wässrigen Phase;
b₂) einen Arbeitsschritt des Waschens der aus b₁) stammenden organischen Phase, um aus dieser organischen Phase die Plutoniumfraktion zu entfernen, die während b₁) nicht reextrahiert wurde, durch Inkontaktbringen der organischen Phase mit einer wässrigen Phase, die Salpetersäure, das gleiche Reduktionsmittel und das gleiche Anti-Salpetersäuremittel, wie sie für den Plutoniumreextraktionsschritt verwendet wurden, umfasst, und anschließendes Abtrennen der organischen Phase von der wässrigen Phase;
b₃) einen Arbeitsschritt des Waschens der aus b₁) stammenden wässrigen Phase, um aus dieser wässrigen Phase die Fraktion von Neptunium(IV), die während b₁) reextrahiert wurden, zu entfernen, durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase;
b₄) die Dekontamination von Uran(VI) zu Neptunium(IV), wobei diese Dekontamination einen Arbeitsschritt der Reextraktion des in der aus b₂) stammenden organischen Phase vorhandenen Neptuniums(IV) durch Inkontaktbringen dieser organischen Phase mit einer wässrigen Phase, die Salpetersäure und das Diglykolamid umfasst, und anschließendes Abtrennen der organischen Phase von der wässrigen Phase und einen Arbeitsschritt des Waschens der aus dem Arbeitsschritt der Reextraktion von Neptunium(IV) stammenden wässrigen Phase durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase umfasst; und
b₅) einen Arbeitsschritt der Reextraktion von Uran, das in der aus dem Arbeitsschritt der Reextraktion von Neptunium(IV) von b₄) stammenden organischen Phase vorhanden ist, durch Inkontaktbringen dieser organischen Phase mit einer wässrigen Phase, die Salpetersäure umfasst, und anschließendes Abtrennen der organischen Phase von der wässrigen Phase.

12. Verfahren nach Anspruch 8, **dadurch gekennzeichnet, dass** der Schritt der Dekontamination von Uran(VI) zu einem oder mehreren Actiniden(IV) ein Schritt der Dekontamination von Uran(VI) zu Neptunium(IV) und zu Plutonium(IV) ist.

13. Verfahren nach Anspruch 12, **dadurch gekennzeichnet, dass** es Folgendes umfasst:
a) einen Schritt der Dekontamination von Uran und Plutonium, die in einer wässrigen Phase vorhanden sind, die aus dem Lösen eines abgebrannten Kernbrennstoffs in Salpetersäure resultiert, gegenüber Actiniden(III) und Spaltprodukten, die ebenfalls in dieser Phase vorhanden sind, wobei der Schritt Folgendes umfasst:
a₁) mindestens einen Arbeitsschritt der Coextraktion von Uran in der Oxidationsstufe VI und Plutonium in der Oxidationsstufe IV aus der wässrigen Phase durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase; und
a₂) mindestens einen Arbeitsschritt des Waschens der aus a₁) stammenden organischen Phase durch Inkontaktbringen dieser organischen Phase mit einer wässrigen Phase, die Salpetersäure umfasst, und anschließendes Abtrennen der organischen Phase von der wässrigen Phase; wobei man eine organische Phase erhält, die Uran(VI), Plutonium(IV) und Neptunium(IV) umfasst;
b) einen Schritt der Verteilung von Uran und Plutonium, die in der aus Schritt a) herrührenden organischen Phase vorhanden sind, in zwei wässrigen Phasen, einer ersten wässrigen Phase, die zu Uran und zu Neptunium dekontaminiertes Plutonium umfasst, und einer zweiten wässrigen Phase, die zu Plutonium und zu Neptunium dekontaminiertes Uran umfasst, wobei der Schritt Folgendes umfasst:
b₁) einen Arbeitsschritt der Reextraktion des Plutoniums, das in der aus Schritt a) stammenden organischen Phase vorhanden ist, wobei das Plutonium in der Oxidationsstufe III reextrahiert wird, durch Inkontaktbringen der aus Schritt a) stammenden organischen Phase mit einer wässrigen Phase, die Salpetersäure, ein Reduktionsmittel, das Plutonium(IV) zu Plutonium(III) und Neptunium(VI) zu Neptunium(IV) reduziert, ohne Uran(VI) zu reduzieren, und ein Anti-Salpetersäuremittel umfasst, und anschließendes Abtrennen der organischen Phase von der wässrigen Phase;
b₂) einen Arbeitsschritt des Waschens der aus b₁) stammenden organischen Phase, um aus dieser Phase die Fraktion von Uran(VI) und Neptunium(IV) zu entfernen, die während b₁) reextrahiert wurde, durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase;
b₃) die Dekontamination von Uran(VI) zu Neptunium(IV) und zu Plutonium(IV), wobei diese Dekontamination einen Arbeitsschritt der Reextraktion des in der aus b₁) stammenden organischen Phase vorhandenen Neptuniums(IV) und Plutoniums(IV) durch Inkontaktbringen dieser organischen Phase mit einer wässrigen Phase, die Salpetersäure und das Diglykolamid umfasst, und anschließendes Abtrennen der organischen Phase von der wässrigen Phase und einen Arbeitsschritt des Waschens der aus dem Arbeitsschritt der Reextraktion von Neptunium(IV) stammenden wässrigen Phase durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase umfasst; und
b₄) einen Arbeitsschritt der Reextraktion von Uran, das in der aus dem Arbeitsschritt der Reextraktion von Neptunium(IV) und von Plutonium(IV) von b₃) stammenden organischen Phase vorhanden ist, durch Inkontaktbringen dieser organischen Phase mit einer wässrigen Phase, die Salpetersäure umfasst, und anschließendes Abtrennen der organischen Phase von der wässrigen Phase.

14. Verfahren nach Anspruch 12, **dadurch gekennzeichnet, dass** es Folgendes umfasst:
a) einen Schritt der Dekontamination von Uran und Plutonium, die in einer wässrigen Phase vorhanden sind, die aus dem Lösen eines abgebrannten Kernbrennstoffs in Salpetersäure resultiert, gegenüber Actiniden(III) und Spaltprodukten, die ebenfalls in dieser Phase vorhanden sind, wobei der Schritt Folgendes umfasst:
a₁) mindestens einen Arbeitsschritt der Coextraktion von Uran in der Oxidationsstufe VI und Plutonium in der Oxidationsstufe IV aus der wässrigen Phase durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase; und
a₂) mindestens einen Arbeitsschritt des Waschens der aus a₁) stammenden organischen Phase durch Inkontaktbringen dieser organischen Phase mit einer wässrigen Phase, die Salpetersäure umfasst, und anschließendes Abtrennen der organischen Phase von der wässrigen Phase; wobei man eine organische Phase erhält, die Uran(VI), Plutonium(IV) und Neptunium(VI) umfasst;
b) einen Schritt der Verteilung von Uran und Plutonium, die in der aus Schritt a) herrührenden organischen Phase vorhanden sind, in zwei wässrigen Phasen, einer ersten wässrigen Phase, die zu Neptunium dekontaminiertes Uran und Plutonium umfasst, und einer zweiten wässrigen Phase, die zu Neptunium und zu Plutonium dekontaminiertes Uran umfasst, wobei der Schritt Folgendes umfasst:
b₁) einen Arbeitsschritt der Reextraktion des Plutoniums und einer Fraktion des Urans, die in der aus Schritt a) stammenden organischen Phase vorhanden sind, wobei das Plutonium in der Oxidationsstufe III reextrahiert wird, durch Inkontaktbringen der aus Schritt a) stammenden organischen Phase mit einer wässrigen Phase, die Salpetersäure, ein Reduktionsmittel, das Plutonium(IV) zu Plutonium(III) und Neptunium(VI) zu Neptunium(IV) reduziert, ohne Uran(VI) zu reduzieren, und ein Anti-Salpetersäuremittel umfasst, und anschließendes Abtrennen der organischen Phase von der wässrigen Phase;
b₂) einen Arbeitsschritt des Waschens der aus b₁) stammenden organischen Phase, um aus dieser wässrigen Phase die Fraktion von Neptunium(IV) zu entfernen, die während b₁) reextrahiert wurde, durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase;
b₃) die Dekontamination von Uran(VI) zu Neptunium(IV) und zu Plutonium(IV), wobei diese Dekontamination einen Arbeitsschritt der Reextraktion von Neptunium(IV) und Plutonium(IV), die in der aus b₁) stammenden organischen Phase vorhanden sind, durch Inkontaktbringen dieser organischen Phase mit einer wässrigen Phase, die Salpetersäure und das Diglykolamid umfasst, und anschließendes Abtrennen der organischen Phase von der wässrigen Phase und einen Arbeitsschritt des Waschens der aus dem Arbeitsschritt der Reextraktion von Neptunium(IV) stammenden wässrigen Phase durch Inkontaktbringen dieser wässrigen Phase mit einer organischen Phase, die Tri-n-butylphosphat in einem organischen Verdünnungsmittel umfasst, und anschließendes Abtrennen der organischen Phase von der wässrigen Phase umfasst; und
b₄) einen Arbeitsschritt der Reextraktion von Uran, das in der aus dem Arbeitsschritt der Reextraktion von Neptunium(IV) von b₃) stammenden organischen Phase vorhanden ist, durch Inkontaktbringen dieser organischen Phase mit einer wässrigen Phase, die Salpetersäure umfasst, und anschließendes Abtrennen der organischen Phase von der wässrigen Phase.

15. Verfahren nach einem der Ansprüche 10, 11, 13 und 14, **dadurch gekennzeichnet, dass** die Salpetersäure und das Diglykolamid umfassende wässrige Phase 0,2 bis 3 mol/l Salpetersäure und 0,01 bis 0,1 mol/l N,N,N',N'-Tetraethyldiglykolamid umfasst.

## Claims

1. Method for processing a spent nuclear fuel, which comprises a decontamination of uranium(VI) from one or more actinides(IV), which decontamination comprises at least one operation for stripping the actinide(IV) or the actinides(IV) from an organic phase, not miscible with water and wherein uranium(VI) and the actinide(IV) or the actinides(IV) are present, by putting the organic phase in contact with an aqueous phase comprising nitric acid and at least one complexing agent which more strongly complexes actinides(IV) than uranium(VI), and then separating the organic phase from the aqueous phase, and which is **characterized in that** said at least one complexing agent is a diglycolamide.

2. Method according to claim 1, **characterized in that** the diglycolamide is selected from *N,N,N',N*'-tetramethyldiglycolamide, *N,N*,*N',N'*-tetraethyl-diglycolamide, *N,N,N',N'*-tetrapropyldiglycolamide and *N,N*-dipropyldiglycolamic acid.

3. Method according to claim 2, **characterized in that** the diglycolamide is *N,N,N',N'*-tetraethyldiglycolamide.

4. Method according to any of claims 1 to 3, **characterized in that** the aqueous phase comprises from 0.01 to 0.1 mol/L of diglycolamide.

5. Method according to any of claims 1 to 4, **characterized in that** the aqueous phase comprises from 0.2 to 3 mol/L of nitric acid.

6. Method according to any of claims 1 to 5, **characterized in that** the decontamination of uranium(VI) from the actinide(IV) or the actinides(IV) further comprises an operation for washing the aqueous phase stemming from the stripping of the actinide(IV) or of the actinides(IV), by putting this nitric aqueous phase in contact with an organic phase comprising an extractant of uranium(VI), and then separating the organic phase from the aqueous phase.

7. Method according to claim 6, **characterized in that** the extractant is tri-n-butyl phosphate.

8. Method according to any of claims 1 to 7, **characterized in that** the actinide(IV) or the actinides(IV) are selected from neptunium(IV), plutonium(IV) and thorium(IV).

9. Method according to any of claims 1 to 8, **characterized in that** the decontamination of uranium(VI) from one or more actinides(IV) is a decontamination of uranium(VI) from neptunium(IV).

10. Method according to claim 9, **characterized in that** it comprises:
a) a step for decontaminating the uranium and the plutonium present in an aqueous phase resulting from the dissolution of a spent nuclear fuel in nitric acid, from the actinides(III) and fission products also present in this phase, which step comprises:
a₁) at least one operation for co-extracting uranium, in the state of oxidation VI, and plutonium, in the state of oxidation IV, from the aqueous phase, by putting this aqueous phase in contact with an organic phase comprising tri-n-butyl phosphate in an organic diluent, and then separating the organic phase from the aqueous phase; and
a₂) at least one operation for washing the organic phase stemming from a₁) to remove from this aqueous phase the fraction of fission products having been extracted during a₁), by putting said organic phase into contact with an aqueous phase comprising nitric acid, and then separating the organic phase from the aqueous phase; whereby an organic phase is obtained, which comprises uranium(VI), plutonium(IV) and neptunium(VI);
b) a step for partitioning the uranium and the plutonium present in the organic phase stemming from step a) into two aqueous phases, a first aqueous phase comprising plutonium decontaminated from uranium and neptunium and a second aqueous phase comprising uranium decontaminated from plutonium and neptunium, which step comprises:
b₁) an operation for stripping the plutonium present in the organic phase stemming from step a), the plutonium being stripped in the state of oxidation III by putting the organic phase stemming from step a) in contact with an aqueous phase comprising nitric acid, a reducing agent which reduces plutonium(IV) to plutonium(III) and neptunium(VI) to neptunium(IV) without reducing uranium(VI), and an anti-nitrous agent, and then separating the organic phase from the aqueous phase;
b₂) an operation for washing the organic phase stemming from b₁) to remove from this organic phase the plutonium fraction not having been stripped during b₁), by putting said organic phase in contact with an aqueous phase comprising nitric acid, the same reducing agent and the same anti-nitrous agent as those used for the plutonium stripping operation, and then separating the organic phase from the aqueous phase;
b₃) an operation for washing the aqueous phase stemming from b₁) to remove from this phase the fraction of uranium(VI) and of neptunium(IV) having been stripped during b₁), by putting said aqueous phase in contact with an organic phase comprising tri-n-butyl phosphate in an organic diluent, and then separating the organic phase from the aqueous phase;
b₄) the decontamination of uranium(VI) from neptunium(IV), this decontamination comprising an operation for stripping the neptunium(IV) present in the organic phase stemming from b₂), by putting this organic phase in contact with an aqueous phase comprising nitric acid and the diglycolamide, and then separating the organic phase from the aqueous phase, and an operation for washing the aqueous phase stemming from the neptunium(IV) stripping operation, by putting this aqueous phase in contact with an organic phase comprising tri-n-butyl phosphate in an organic diluent, and then separating the organic phase from the aqueous phase; and
b₅) an operation for stripping the uranium(VI) present in the organic phase stemming from the neptunium(IV) stripping operation of b₄), by putting this organic phase in contact with an aqueous phase comprising nitric acid, and then separating the organic phase from the aqueous phase.

11. Method according to claim 9, **characterized in that** it comprises:
a) a step for decontaminating the uranium and the plutonium present in an aqueous phase resulting from the dissolution of a spent nuclear fuel in nitric acid, from the actinides(III) and fission products also present in this phase, which step comprises:
a₁) at least one operation for co-extracting uranium, in the state of oxidation VI, and plutonium, in the state of oxidation IV, from the aqueous phase, by putting this aqueous phase in contact with an organic phase comprising tri-n-butyl phosphate in an organic diluent, and then separating the organic phase from the aqueous phase; and
a₂) at least one operation for washing the organic phase stemming from a₁) to remove from this aqueous phase the fraction of fission products having been extracted during a₁), by putting said organic phase into contact with an aqueous phase comprising nitric acid, and then separating the organic phase from the aqueous phase; whereby an organic phase is obtained, which comprises uranium(VI), plutonium(IV) and neptunium(VI);
b) a step for partitioning the uranium and the plutonium present in the organic phase stemming from step a) into two aqueous phases, a first aqueous phase comprising plutonium and uranium decontaminated from neptunium and a second aqueous phase comprising uranium decontaminated from neptunium and plutonium, which step comprises:
b₁) an operation for stripping the plutonium and a fraction of the uranium present in the organic phase stemming from step a), the plutonium being stripped in the state of oxidation III by putting the organic phase stemming from step a) in contact with an aqueous phase comprising nitric acid, a reducing agent which reduces plutonium(IV) to plutonium(III) and neptunium(VI) to neptunium(IV) without reducing uranium(VI), and an anti-nitrous agent, and then separating the organic phase from the aqueous phase;
b₂) an operation for washing the organic phase stemming from b₁) to remove from this organic phase the plutonium fraction not having been stripped during b₁), by putting said organic phase in contact with an aqueous phase comprising nitric acid, the same reducing agent and the same anti-nitrous agent as those used for the plutonium stripping operation, and then separating the organic phase from the aqueous phase;
b₃) an operation for washing the aqueous phase stemming from b₁) to remove from this aqueous phase the neptunium(IV) fraction having been stripped during b₁), by putting this aqueous phase in contact with an organic phase comprising tri-n-butyl phosphate in an organic diluent, and then separating the organic phase from the aqueous phase;
b₄) the decontamination of uranium(VI) from neptunium(IV), this decontamination comprising an operation for stripping the neptunium(IV) present in the organic phase stemming from b₂), by putting this organic phase in contact with an aqueous phase comprising nitric acid and the diglycolamide, and then separating the organic phase from the aqueous phase, and an operation for washing the aqueous phase stemming from the neptunium(IV) stripping operation by putting this aqueous phase in contact with an organic phase comprising tri-n-butyl phosphate in an organic diluent, and then separating the organic phase from the aqueous phase; and
b₅) an operation for stripping the uranium present in the organic phase stemming from the neptunium(IV) stripping operation of b₄), by putting this organic phase in contact with an aqueous phase comprising nitric acid, and then separating the organic phase from the aqueous phase.

12. Method according to claim 8, **characterized in that** the step for decontaminating uranium(VI) from one or more actinides(IV) is a step for decontaminating uranium(VI) from neptunium(IV) and plutonium(IV).

13. Method according to claim 12, **characterized in that** it comprises:
a) a step for decontaminating the uranium and the plutonium present in an aqueous phase resulting from the dissolution of a spent nuclear fuel in nitric acid, from the actinides(III) and fission products also present in this phase, which step comprises:
a₁) at least one operation for co-extracting uranium, in the state of oxidation VI, and plutonium in the state of oxidation IV, from the aqueous phase, by putting this aqueous phase in contact with an organic phase comprising tri-n-butyl phosphate in an organic diluent, and then separating the organic phase from the aqueous phase; and
a₂) at least one operation for washing the organic phase stemming from a₁), by putting said organic phase into contact with an aqueous phase comprising nitric acid, and then separating the organic phase from the aqueous phase;
whereby an organic phase is obtained, which comprises uranium(VI), plutonium(IV) and neptunium(VI);
b) a step for partitioning the uranium and the plutonium present in the organic phase stemming from step a) into two aqueous phases, a first aqueous phase comprising plutonium decontaminated from uranium and neptunium and a second aqueous phase comprising uranium decontaminated from plutonium and neptunium, which step comprises:
b₁) an operation for stripping the plutonium present in the organic phase stemming from step a), the plutonium being stripped in the state of oxidation III by putting the organic phase stemming from step a) in contact with an aqueous phase comprising nitric acid, a reducing agent which reduces plutonium(IV) to plutonium(III) and neptunium(VI) to neptunium(IV) without reducing uranium(VI), and an anti-nitrous agent, and then separating the organic phase from the aqueous phase;
b₂) an operation for washing the aqueous phase stemming from b₁) to remove from this phase the fraction of uranium(VI) and of neptunium(IV) having been stripped during b₁), by putting said aqueous phase in contact with an organic phase comprising tri-n-butyl phosphate in an organic diluent, and then separating the organic phase from the aqueous phase;
b₃) the decontamination of uranium(VI) from neptunium(IV) and plutonium(IV), this decontamination comprising an operation for stripping the neptunium(IV) and the plutonium(IV) present in the organic phase stemming from b₁), by putting this organic phase in contact with an aqueous phase comprising nitric acid and the diglycolamide, and then separating the organic phase from the aqueous phase, and an operation for washing the aqueous phase stemming from the neptunium(IV) stripping operation by putting this aqueous phase in contact with an organic phase comprising tri-n-butyl phosphate in an organic diluent, and then separating the organic phase from the aqueous phase; and
b₄) an operation for stripping the uranium(VI) present in the organic phase stemming from the neptunium(IV) and plutonium (IV) stripping operation of b₃), by putting this organic phase in contact with an aqueous phase comprising nitric acid, and then separating the organic phase from the aqueous phase.

14. Method according to claim 12, **characterized in that** it comprises:
a) a step for decontaminating the uranium and the plutonium present in an aqueous phase resulting from the dissolution of a spent nuclear fuel in nitric acid, from the actinides(III) and fission products also present in this phase, which step comprises:
a₁) at least one operation for co-extracting uranium, in the state of oxidation VI, and the plutonium, in the state of oxidation IV, from the aqueous phase, by putting this aqueous phase in contact with an organic phase comprising tri-n-butyl phosphate in an organic diluent, and then separating the organic phase from the aqueous phase; and
a₂) at least one operation for washing the organic phase stemming from a₁), by putting said organic phase into contact with an aqueous phase comprising nitric acid, and then separating the organic phase from the aqueous phase;
whereby an organic phase is obtained, which comprises uranium(VI), plutonium(IV) and neptunium(VI);
b) a step for partitioning the uranium and the plutonium present in the organic phase stemming from step a) into two aqueous phases, a first aqueous phase comprising plutonium and uranium decontaminated from neptunium and a second aqueous phase comprising uranium decontaminated from plutonium and neptunium, which step comprises:
b₁) an operation for stripping the plutonium present in the organic phase stemming from step a), the plutonium being stripped in the state of oxidation III by putting the organic phase stemming from step a) in contact with an aqueous phase comprising nitric acid, a reducing agent which reduces plutonium(IV) to plutonium(III) and neptunium(VI) to neptunium(IV) without reducing uranium(VI), and an anti-nitrous agent, and then separating the organic phase from the aqueous phase;
b₂) an operation for washing the aqueous phase stemming from b₁) to remove from this phase the fraction of neptunium(IV) having been stripped during b₁), by putting said aqueous phase in contact with an organic phase comprising tri-n-butyl phosphate in an organic diluent, and then separating the organic phase from the aqueous phase;
b₃) the decontamination of uranium(VI) from neptunium(IV) and plutonium(IV), this decontamination comprising an operation for stripping the neptunium(IV) and of the plutonium(IV) present in the organic phase stemming from b₁), by putting this organic phase in contact with an aqueous phase comprising nitric acid and the diglycolamide, and then separating the organic phase from the aqueous phase, and an operation for washing the aqueous phase stemming from the neptunium(IV) stripping operation by putting this aqueous phase in contact with an organic phase comprising tri-n-butyl phosphate in an organic diluent, and then separating the organic phase from the aqueous phase; and
b₄) an operation for stripping the uranium(VI) present in the organic phase stemming from the neptunium(IV) stripping operation of b₃), by putting this organic phase in contact with an aqueous phase comprising nitric acid, and then separating the organic phase from the aqueous phase.

15. Method according to any of claims 10, 11, 13 and 14, **characterized in that** the aqueous phase comprising nitric acid and the diglycolamide comprises from 0.2 to 3 mol/L of nitric acid and from 0.01 to 0.1 mol/L of *N,N,N',N'-*tetraethyldiglycolamide.
